# EUROPEAN PATENT APPLICATION

(11) **EP 4 206 944 A1**
(43) Date of publication of application: **05.07.2023**
(21) Application number: 22742053.6
(22) Date of filing: 12.01.2022
(51) Int. Cl.: G06F 16/23

(54) **BLOCKCHAIN-BASED METHOD AND APPARATUS FOR DATA PROCESSING, DEVICE, AND READABLE STORAGE MEDIUM**

(30) Priority: 20.01.2021 CN 202110074890
(71) Applicant: Tencent Technology (Shenzhen) Company Limited, Shenzhen, Guangdong 518057 (CN)
(72) Inventor: LIU, Qucheng, Shenzhen, Guangdong 518057 (CN); LI, Maocai, Shenzhen, Guangdong 518057 (CN); WANG, Zongyou, Shenzhen, Guangdong 518057 (CN); KONG, Li, Shenzhen, Guangdong 518057 (CN); LAN, Hu, Shenzhen, Guangdong 518057 (CN); LIU, Pan, Shenzhen, Guangdong 518057 (CN); ZHOU, Kaiban, Shenzhen, Guangdong 518057 (CN); ZHU, Gengliang, Shenzhen, Guangdong 518057 (CN); SHI, Yifang, Shenzhen, Guangdong 518057 (CN); HUANG, Huankun, Shenzhen, Guangdong 518057 (CN)
(74) Representative: Eisenführ Speiser
(86) International application number: PCT/CN2022/071575
(87) International publication number: WO 2022/156574

(57) **Abstract**

Disclosed are a blockchain-based method and apparatus for data processing, a device, and a readable storage medium. Transaction data in at least two blocks are added to an execution queue, and at least two pieces of transaction data are acquired in sequence from the execution queue; contract services for the at least two pieces of transaction data are executed in parallel, and parallel transaction read buffers and parallel transaction write buffers generated when each contract service is executed are acquired; merged transaction write buffers are determined in block buffers, and an updated transaction read buffer corresponding to target transaction data is acquired in the merged transaction write buffers; transaction write buffers to be merged of the target transaction data are determined on the basis of the updated transaction read buffer, of the parallel transaction read buffers corresponding to the target transaction data, and of the parallel transaction write buffers corresponding to the target transaction data; and, said transaction write buffers of the target transaction data are merged into the block buffer pertinent to the target transaction data. The employment of the present application increases the efficiency of a blockchain network in terms of processing transaction data.

## Description

### RELATED APPLICATION

This application claims priority to Chinese Patent Application No. 202110074890.0, entitled "METHOD AND APPARATUS FOR PROCESSING DATA BASED ON BLOCKCHAIN, DEVICE, AND READABLE STORAGE MEDIUM" and filed with the China National Intellectual Property Administration on January 20, 2021, which is incorporated herein by reference in its entirety.

### FIELD OF THE TECHNOLOGY

The present disclosure relates to the technical field of the Internet, and particularly relates to data processing technology based on blockchains.

### BACKGROUND OF THE DISCLOSURE

Governments and enterprises have begun to store transaction data in blockchain networks due to increasing importance of data security.

In most conventional blockchain networks in the art, transactions in different blocks are subject to serial execution in a sequence based on a block height, and contract provisions corresponding to transaction data in one block are subject to serial execution in a sequence based on a sequential number of the transaction data. For example, a block *m* comprises transaction data 1, transaction data 2, ..., and transaction data *n.* When processing the transaction data of block *m*, a contract provision corresponding to the transaction data 1 is first executed to obtain a execution result 1 for the transaction data 1, then a contract provision corresponding to the transaction data 2 is executed according to the execution result 1 and the transaction data 2 to obtain a execution result 2 for the transaction data 2, and then the contract provisions corresponding to the subsequent transaction data are executed. Processing on the transaction data 1 of block *m+1* starts after processing on the transaction data of block *m* is finishes.

Apparently, such mode of processing the transaction data cannot match a growing speed of the transaction data inputted into the blockchain network, and hence a large amount of transaction data is stranded in the blockchain network, resulting in low efficiency of processing the transaction data in blocks.

### SUMMARY

A method and an apparatus for processing data based on a blockchain, a device, and a readable storage medium are provided according to embodiments of the present disclosure. Transaction data is processed more efficiently within blockchain networks.

In one aspect, a method for processing data based on a blockchain is provided according to an embodiment of the present disclosure. The method is executable by a computer device and comprises: adding transaction data of at least two blocks into an execution queue according to a sequence of block heights each corresponding to one of the at least two blocks and a sequence of sequential numbers each corresponding to one piece of the transaction data, and acquiring at least two pieces of the transaction data from the execution queue according to the two sequences, where the at least two pieces of the transaction data each carries a piece of contract information; executing, in parallel, contract provisions indicated in the contract information carried by the at least two pieces of the transaction data, where a read cache and a write cache are generated when executing each of the contract provisions; determining merged write caches from block caches of the at least two blocks, and acquiring, from the merged write caches, an updated read cache for a target piece among the at least two pieces of the transaction data, where a piece of the transaction data that corresponds to the merged write cache is previous to the target piece of the transaction data with respect to a position in the execution queue or a time point of being added into the execution queue; determining a to-be-merged write cache for the target piece of the transaction data according to the updated read cache, the read cache for the target piece of the transaction data, and the write cache for the target piece of the transaction data; and merging the to-be-merged write cache of the target piece of the transaction data into the block cache of a block to which the target piece of the transaction data belongs. Then, a piece of the transaction data subsequent to the target piece of the transaction data in the execution queue may be processed to merge the to-be-merged write cache of the subsequent piece of the transaction data.

In another aspect, an apparatus for processing data based on a blockchain is provided according to an embodiment of the present disclosure. The apparatus is applicable to a computer device and comprises: a first acquiring module, configured to add transaction data of at least two blocks into an execution queue according to a sequence of block heights each corresponding to one of the at least two blocks and a sequence of sequential numbers each corresponding to one piece of the transaction data, and acquire at least two pieces of the transaction data from the execution queue according to the two sequences, where the at least two pieces of the transaction data each carries a piece of contract information; a second acquiring module, configured to execute, in parallel, contract provisions indicated in the contract information carried by the at least two pieces of the transaction data, where a read cache and a write cache are generated when executing each of the contract provisions; a third acquiring module, configured to determine merged write caches from block caches of the at least two blocks, and acquire, from the merged write caches, an updated read cache for a target piece among the at least two pieces of the transaction data, where a piece of the transaction data that corresponds to the merged write cache is previous to the target piece of the transaction data with respect to a position in the execution queue or a time point of being added into the execution queue; a first merging module, configured to determine a to-be-merged write cache for the target piece of the transaction data according to the updated read cache, the read cache for the target piece of the transaction data, and the write cache for the target piece of the transaction data; and a second merging module, configured to merge the to-be-merged write cache of the target piece of the transaction data into the block cache of a block to which the target piece of the transaction data belongs. Then, a piece of the transaction data subsequent to the target piece of the transaction data in the execution queue may be processed to merge the to-be-merged write cache of the subsequent piece of the transaction data..

In another aspect, a computer device is provided according to an embodiment of the present disclosure. The computer device comprises a processor, a memory, and a network interface, where the processor is connected to the memory and the network interface, the network interface is configured to enable data communication, the memory is configured to store a computer program, and the processor is configured to invoke the computer program to configure the computer device to perform the method according to embodiments of the present disclosure.

In another aspect, a computer-readable storage medium is provided according to an embodiment of the present disclosure. The computer-readable storage medium stores a computer program, where the computer program is capable to be loaded and executed by a processor to perform the method according to embodiments of the present disclosure.

In another aspect, a computer program product or a computer program is provided according to an embodiment of the present disclosure. The computer program product or the computer program comprises computer instructions, where the computer instructions are stored in a computer-readable storage medium, and a processor of a computer device reads the computer instructions from the computer-readable storage medium and executes the computer instructions to configure the computer device to perform the method according to embodiments of the present disclosure.

In embodiments of the present disclosure, the contract provisions corresponding to the at least two pieces of the transaction data can be executed in parallel according to the respective contract information carried by the at least two pieces of transaction data. The at least two pieces of transaction data are sequenced according to the block heights and the sequential numbers of the pieces of the transaction data. The read cache and the write cache generated by executing each contract provision are acquired. The read cache for the target piece of the transaction data may be an outdated read cache. Thus, the merged write cache is first determined within the block caches for the at least two blocks, and then the updated read cache for the target piece of the transaction data is acquired from the merged write caches. Piece(s) of the transaction data corresponding to the merged write cache(s) is previous to the target piece of the transaction data with respect to the position in the execution queue or the time point of being added into the execution queue. It can be determined based on the updated read cache whether the read cache for the target piece of the transaction data is outdated, and then the to-be-merged write cache of the target piece of the transaction data may be determined according to the updated read cache and the write cache for the target piece of the transaction data. In one aspect, multiple pieces of transaction data are executed in parallel, thus efficiency of processing the transaction data is improved in the blockchain network, and it is less likely that a large amount of transaction data jams in the execution queue. In another aspect, after the multiple pieces of transaction data are executed in parallel, the updated read cache can be acquired for each piece of the transaction data according to the merged write cache corresponding to such each piece of the transaction data, then it is determined based on such updated read cache whether the corresponding read cache is outdated. Thereby, the read cache and the write cache are checked to ensure correctness of the to-be-merged write cache. That is, data correctness in the block caches can be ensured while efficiency of processing the transaction data is improved.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic architectural diagram of system architecture according to an embodiment of the present disclosure.
Figure 2 is a schematic diagram of a scene of data processing based on a blockchain according to an embodiment of the present disclosure.
Figure 3 is a schematic flowchart of a method for processing data based on a blockchain according to an embodiment of the present disclosure.
Figure 4 is a schematic diagram of a scene of data processing based on a blockchain according to another embodiment of the present disclosure.
Figure 5 is a schematic diagram of a scene of data processing based on a blockchain according to another embodiment of the present disclosure.
Figure 6 is a schematic diagram of a scene of data processing based on a blockchain according to another embodiment of the present disclosure.
Figure 7 is a schematic flowchart of a method for processing data based on a blockchain according to another embodiment of the present disclosure.
Figure 8 is a schematic flowchart of a method for processing data based on a blockchain according to another embodiment of the present disclosure.
Figure 9 is a schematic structure diagram of an apparatus for processing data based on a blockchain according to an embodiment of the present disclosure.
Figure 10 is a schematic structure diagram of a computer device according to an embodiment of the present disclosure.

### DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Hereinafter some terms are briefly explained to facilitate understanding.
1. Blockchain. A strict interpretation of the blockchain is a chain-like data structure of which a basic unit is a block. The block verifies obtained history transaction obtained previously via a digital abstract, which meets a requirement on tamper resistance and expandability of a distributed ledger. A broad interpretation of the blockchain may further include distributed accounting technology realized through the blockchain structure, and includes distributed consensus, privacy and security protection, peer-to-peer communication technology, network protocols, smart contracts, and the like.
   The blockchain aims to achieve a distributed ledger that records data. The ledger only allows adding data and forbids deleting data. A basic structure underlying the ledger is a linear chain table. The chain table is formed by connecting "blocks" in series. A hash of a previous block is recorded in a subsequent block. Legality of each block (and of a transaction in the block) can be verified rapidly through calculating the hash. In a case that a node in the network proposes to add a new block, a consensus needs to be reached on the new block through a through a consensus mechanism in order to confirm the addition.
2. Block. A block is a data packet carrying transaction data in a blockchain network, and is a data structure marked with a timestamp and a hash corresponding to a previous block. The block is verified through the consensus mechanism of the network so as to confirm a transaction in the block. The block comprises a block header and a block body. The block header may record meta-information of the current block, and comprises data such as a current version number, a hash corresponding to the previous block, a timestamp, a random number, and a hash of a Merkle root. The block body may record detailed data generated in a period, and comprises all verified transaction records or other information generated when generating the current block. The block body may be treated as a representation of the ledger. In addition, the detailed data of the block body may be hashed through the Merkle tree to generate a unique Merkle root, which is recorded in the block header.
   The previous block is also called a parent block. The hash corresponding to the current block and the hash corresponding to the parent block are recorded in the block header to indicate a temporal sequence in the blockchain.
3. Hash. A hash is called an information-feature value or a feature value. The hash is generated through encrypting input data of an arbitrary length through a hash algorithm into an output of a fixed length. The original input data cannot be retrieved by decrypting the hash, because the hashing is one-way encryption. In the blockchain, each block (except the initial block) contains the hash of the previous block. The hash is a basis of core potentials and the most important aspect of the blockchain technology. The hash ensures authenticity of recording and viewing data and integrity of the whole blockchain.
4. Smart contract. The concept of the smart contract comprises three major elements, i.e., commitment, protocol, and a digital form, and hence application of the blockchains can be expanded into every link of transaction, payment, settlement, and clearing in the financial industry. The smart contract refers to immediate execution of a corresponding contract term when a pre-compiled condition is triggered. An operation principle of the smart contract is similar to a if-then statement of a computer program.

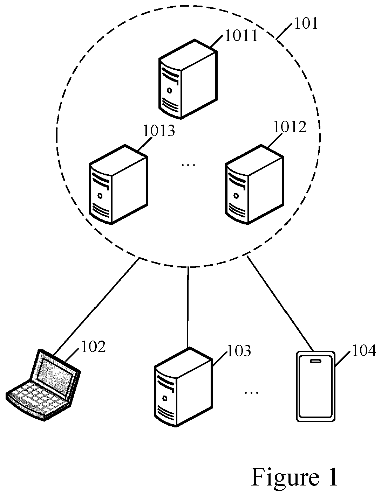

Reference is made to Figure 1, which is a schematic diagram of system architecture according to an embodiment of the present disclosure. As shown in Figure 1, the system architecture may comprise a blockchain network 101, a user terminal 102, a user terminal 103, ..., and a user terminal 104. The blockchain network 101 may comprise a blockchain node 1011, a blockchain node 1012, ..., and a blockchain node 1013. The foregoing blockchain network 101 may comprise one or more blockchain nodes, of which a quantity is not limited herein. The foregoing user terminal may comprise one or more user terminals, of which a quantity is not limited herein.

Communication connection may be provided among the user terminals. For example, there is communication connection between the user terminal 102 and the user terminal 103, and there is another communication between the user terminal 102 and the user terminal 104.

Each blockchain node (including the blockchain node 1011, the blockchain node 1012, and the blockchain node 1013) when operating normally may receive transaction data transmitted by a user terminal. That is, communication connection is provided between the user terminal and the blockchain node. For example, there is communication connection between the blockchain node 1011 and the user terminal 102, and there is another communication connection between the blockchain node 1011 and the user terminal 104. The blockchain node generates a block based on received transaction data, and then the block is added in the chain. Communication connection may be provided among the blockchain nodes to ensure data interoperability among the blockchain nodes. For example, there is communication connection between the blockchain node 1011 and the blockchain node 1012, and there is another communication connection between the blockchain node 1011 and the blockchain node 1013.

A manner of achieving the forgoing communication connection is not limited. The connection may be implemented through direct or indirect wired communication, direct or indirect wireless communication, or another manner of communication, which is not limited herein.

The userterminal 102, the user terminal 103, ..., the user terminal 104, the blockchain node 1011, the blockchain node 1012, ..., and the blockchain node 1013 as shown in Figure 1 may include a mobile phone, a tablet computer, a laptop, a palmtop, a smart sound box, a mobile internet device (MID), a point of sales (POS) machine, a wearable device (such as a smart watch and a smart bracelet), and the like.

Herein the method for processing data based on the blockchain may be executed by a computer device. The computer device includes an arbitrary blockchain node in the foregoing blockchain network 101. The blockchain node includes, but is not limited to, a terminal or a server. The server may be an independent physical server, may be a server cluster or distributed system comprising multiple physical servers, and may be a cloud server providing basic cloud computing services, such as a cloud service, a cloud database, cloud computing, a cloud function, cloud storage, a network provision, cloud communication, a middleware provision, a domain name provision, a security provision, a CDN, and a large data and AI platform. The terminal may be, but is not limited to, a smartphone, a tablet computer, a notebook computer, a desktop computer, a smart speaker, a smartwatch, or the like. The terminal and the server may be directly or indirectly connected through wired or wireless communication, which is not limited herein.

In order to facilitate description, herein a block having a block height of *X* is named as block *X*, and the block height of *X* is denoted as block height *X*, where *X* is a positive integer. For example, a block having a block height of 1 is called block 1, and the block height of 1 is denoted as block height 1. A block having a block height of *m* is called block *m*, and the block height of *m* is denoted as block height *m.* Other blocks corresponding to other block heights are named in a same manner, and are not enumerated herein.

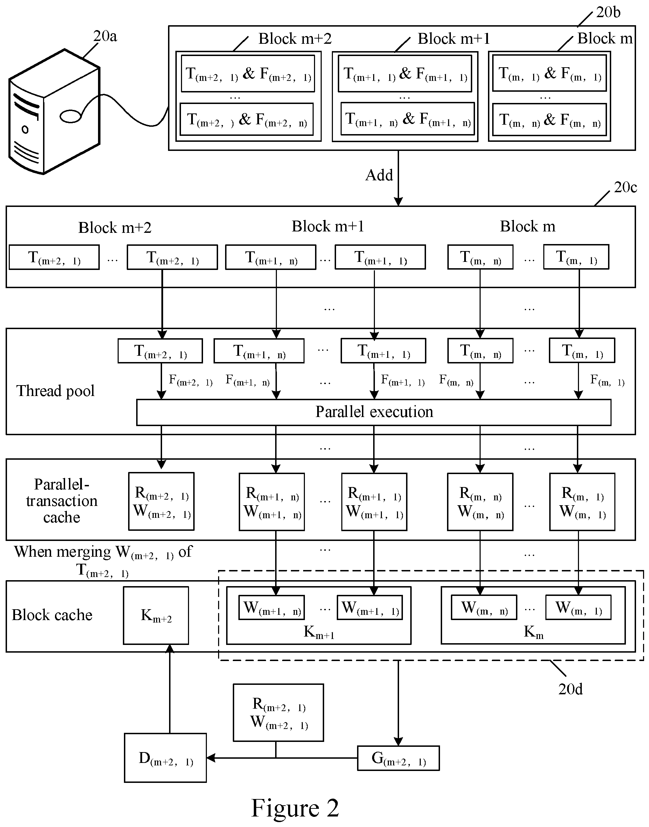

Reference is made to Figure 2, which is a schematic diagram of a scene of processing data based on a blockchain according to an embodiment of the present disclosure. As shown in Figure 2, a computer device 20a may be an arbitrary blockchain node in the blockchain network 101 as shown in Figure 1. The computer device 20a obtains at least two blocks 20b. The at least two blocks 20b may comprise 3 blocks, namely block *m*, block *m+1* and block *m+2. m* is a positive integer greater than 1. When generating the at least two blocks 20b, the computer device 20a may serves as a block producing node, or another blockchain node in the blockchain network may serves as the block producing node. A source of producing the at least two blocks 20b is not limited herein.

Reference is further made to Figure 2. Block *m* may comprise transaction data *T_{(m, 1)}* to transaction data *T_{(m, n)}.* Block *m +1* may comprise transaction data *T_{(m+1, 1)}* to transaction data *T_{(m+1, n)}.* Block *m+2* may comprise transaction data *T_{(m+2, 1)}* to transaction data *T_{(m+2, n)}.* In the subscript of "transaction data *T_{(a, b)}*"*,* a represents that the transaction data belongs to block *a*, and *b* represents the sequential number for such piece of transaction data. *a* and *b* are both positive integers. *a* is smaller than or equal to a total quantity of the at least two blocks 20b, and *b* is smaller than or equal to a total quantity of pieces of transaction data in block *a.*

Besides the transaction data, the at least two blocks 20b may further comprise contract information corresponding to the transaction data. As shown in Figure 2, block *m* may comprise contract information *F_{(m, 1)}* corresponding to transaction data *T_{(m, 1)},* ..., and contract information *F_{(m,n)}* corresponding to transaction data *T_{(m, n)}.* Block *m+1* may comprise contract information *F_{(m+1, 1)}* corresponding to transaction data *T_{(m+1, 1)},* ..., and contract information *F_{(m+1, n)}* corresponding to transaction data *T_{(m +1, n)}.* Block *m+2* may comprise contract information *F_{(m+2, 1)}* corresponding to transaction data *T_{(m+2, 1)},* ..., and contract information *F_{(m+2, n)}* corresponding to transaction data *T_{(m+2, n)}.* In the subscript of "contract information *F_{(a, b)}*"*,* a represents that the contract information belongs to block *a*, and *b* represents a sequential number of such piece of contract information. *a* and *b* are both positive integers. *a* is smaller than or equal to a total quantity of the at least two blocks 20b, and *b* is smaller than or equal to a total quantity of pieces of contract information in block *a.* The symbol "&" in Figure 2 represent the correspondence.

Reference is further made to Figure 2. The computer device 20a adds transaction data (such as transaction data *T_{(m, 1)},* ..., transaction data *T_{(m, n)},* transaction data *T_{(m+1, 1)},* ..., transaction data *T_{(m+1, n)},* ..., transaction data *T_{(m+2, 1)},* ..., and transaction data *T_{(m+2, n)})* in the at least two blocks 20b into an execution queue 20c according to a sequence of block heights each corresponding to one of the at least two blocks and a sequence of sequential numbers each corresponding to one piece of transaction data. As shown in Figure 2, in the execution queue 20c, the transaction data contained in block *m* is previous to the transaction data contained in block *m+1* and the transaction data contained in block *m+2,* and transaction data *T_{(m, 1)}* in block m is previous to transaction data *T_{(m, n)}.* The execution queue 20c may also be called a Tx Queue. In a subsequent step, when a pool of execution threads (equivalent to the thread pool as shown in Figure 2) has idle threads, the computer device 20a adds transactions (i.e., pieces of transaction data) into the idle threads based on the sequence, such that the transactions are executed in parallel. The pool of execution threads may also be called a transaction-thread pool or a transaction processing pool (Tx Process Pool). In advance, the pool of execution threads may generate transaction processing threads of a quantity corresponding to a pool size which is specified in a file configured by the computer device 20a. The transaction process threads (including the idle threads) are configured to execute contract provisions in the transactions in parallel.

According to the execution thread pool, the computer device 20a acquires at least two pieces of transaction data from the execution queue 20c based on the two sequences. As shown in Figure 2, the at least two pieces of transaction data may comprise transaction data *T_{(m, 1)},* ..., transaction data *T_{(m, n)},* transaction data *T_{(m+1, 1)},* ..., transaction data *T_{(m+1, n)}* and transaction data *T_{(m+2, 1)}*. According to contract information corresponding to each piece of transaction data, the computer device 20a executes the contract provisions corresponding to transaction data *T_{(m, 1)},* ..., transaction data *T_{(m, n)},* transaction data *T_{(m+1, 1)},* ..., transaction data *T_{(m+1, n)}* and transaction data *T_{(m+2, 1)}* in parallel in the pool of execution threads to acquire parallel-transaction caches, each of which is generated by executing a corresponding contract provision.

The parallel-transaction caches may comprise read caches and write caches for parallel transactions (which are also called transaction-executing results of the transaction data). The read cache is configured to record a set of data which a contract provision reads for a corresponding piece of transaction data, for example, read cache *R_{(m, 1)}* for transaction data *T_{(m,1)},* ..., read cache *R_{(m, n)}* for transaction data *T_{(m, n)},* read cache *R_{(m+1, 1)}* for transaction data *T_{(m+1, 1)},* ..., read cache *R_{(m+1, n)}* for transaction data *T_{(m+1, n)},* and read cache *R_{(m+2, 1)}* for transaction data *T_{(m+2, 1)},* as shown in Figure 2.

The write cache is configured to record a set of data which the contract provision modifies for the corresponding piece of transaction data, for example, the write cache *W_{(m, 1)}* for transaction data *T_{(m, 1)},* ..., the write cache *W_{(m, n)}* for transaction data *T_{(m, n)},* the write cache *W_{(m+1, 1)}* for transaction data *T_{(m+1, 1)},* ..., the write cache *W_{(m+1, n)}* for transaction data *T_{(m+1, n)},* and the write cache *W_{(m+2, 1)}* for transaction data *T_{(m+2, 1)},* as shown in Figure 2.

The computer device 20a executes contract provisions of the multiple blocks in parallel, such as a contract provision indicated in contract information *F_{(m, 1)},* ..., a contract provision indicated in contract information *F_{(m, n)},* a contract provision indicated in contract information *F_{(m+1, 1)},* ..., a contract provision indicated in contract information *F_{(m+1, n)},* and a contract provision indicated in contract information *F_{(m+2, 1)},* as shown in Figure 2. It is assumed that there is no intersection and no mutual influence among the contract provisions and between these contract provisions and contract provisions of merged blocks. That is, the read caches read by different contract provisions record different data. In such case, at least two write caches are to-be-merged write caches which correspond to at least two pieces of transaction data, respectively.

The block heights of the merged blocks are smaller than respective block heights of the at least two blocks. The at least two blocks 20b and the aforementioned merged blocks refer to cached blocks, namely, these blocks are currently not added into a blockchain. Transaction(s) (namely, the transaction data) in the cached block are unconfirmed transaction(s), that is, the transaction data is in a state of being unconfirmed. After the transaction data is broadcasted in the whole network, a blockchain node keeps selecting transaction data from a transaction pool (generally according to a sequence based on transaction fees) and record the selected transaction data into blocks. The unconfirmed transaction refers to a transaction which has not been recorded into the blockchain.

In practice, there may be an intersection among the multiple contract provisions or between the multiple contract provisions and the contract provisions in the merged blocks. That is, read data in read caches read by different contract provisions is identical. For example, read cache *R_{(m,1)}* corresponding to transaction data *T_{(m, 1)}* is the same as read cache *R_{(m+1, 1)}* corresponding to transaction data *T_{(m+1, 1)}*. Namely, there is an intersection between read cache *R_{(m, 1)}* and read cache *R_{(m+1, 1)},* and read cache *R_{(m+1, 1)}* may be regarded as recording an outdated data set. Hence, when the contract provisions corresponding to transaction data *T_{(m, 1)},* ..., and transaction data *T_{(m+1, 1)}* are executed in parallel, the obtained write cache *W_{(m+1, 1)}* no longer records data representing a "real-time" result.

A block cache is configured to record a set of data modified when executing all contract provisions of a block. Before merging the write caches corresponding to the transaction data (e.g., transaction data *T_{(m, 1)},* ..., transaction data *T_{(m, n)},* transaction data *T_{(m+1, 1)},* ..., transaction data *T_{(m+1, n)}* and transaction data *T_{(m+2, 1)}* as shown in Figure 2) into the corresponding block cache(s) based on the two sequences, the computer device 20a needs to verify whether the read caches records legal read data for the transaction data. Namely, it is checked whether data in the read caches (e.g., read caches *R_{(m, 1)},* ..., read caches *R_{(m, n)},* read caches *R_{(m+1, 1)},* ..., read caches *R_{(m+1, n)}* and read caches *R_{(m+2, 1)}*) is outdated read data.

In order to facilitate description and understanding, herein it is assumed that a target piece of the transaction data is transaction data *T_{(m+2, 1)}* as shown in Figure 2. Namely, according to the two sequences, a state of data in read cache *R_{(m+2, 1)}* corresponding to transaction data *T_{(m+2, 1)}* is currently to be checked, that is, it is checked whether the read data in read cache *R_{(m+2, 1)}* is outdated. At such time, as shown in Figure 2, there are write cache *W_{(m, 1)},* ..., and the write cache *W_{(m, n)}* in block cache *Kₘ* corresponding to block m, there are write cache *W_{(m+1, 1)},* ..., write cache *W_{(m+1, n)}* in block cache *Kₘ₊₁* corresponding to block *m+1,* and these write caches all belong to the merged write cache 20d for transaction data *T_{(m+2, 1)}*.

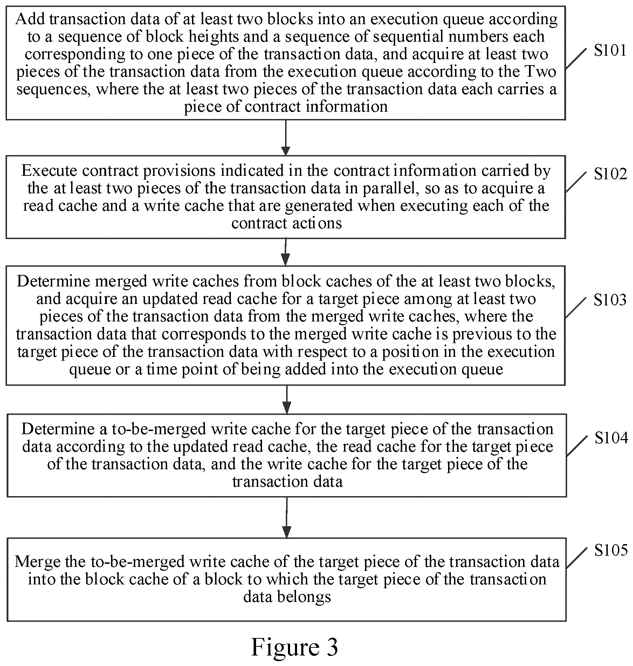

Reference is further made to Figure 2. The computer device 20a acquires updated read cache *G_{(m+2, 1)}* for the target piece of the transaction data (namely, the transaction data *T_{(m+2, 1)}*) from the merged write caches 20d. A specific process of acquiring the updated read cache *G_{(m+2, 1)}* may refer to step S103 in a following embodiment as shown in Figure 3, and is not illustrated here.

The computer device 20a checks the read cache (namely, read cache *R_{(m+2, 1)}*) corresponding to the target piece of the transaction data according to the updated read cache *G_{(m+2, 1)}* to obtain a check result. In a case that the check result indicates that there is no inconsistency between read data in read cache *R_{(m+2, 1)}* and read data in updated read cache *G_{(m+2, 1)},* write cache *W_{(m+2, 1)}* is determined to serve as to-be-merged write cache *D_{(m+2, 1)}* for transaction data *T_{(m+2, 1)}.* In a case that the check result indicates that there is inconsistency between read data in read cache *R_{(m+2, 1)}* and read data in updated read cache *G_{(m+2, 1)},* a transaction-executing provision of transaction data *T_{(m+2, 1)}* is executed again according to updated read cache *G_{(m+2, 1)}* and transaction data *T_{(m+2, 1)},* so as to obtain a execution result of transaction data *T_{(m+2, 1)},* and to-be-merged write cache *D_{(m+2, 1)}* is created according to the execution result.

Reference is further made to Figure 2. The computer device 20a merges to-be-merged write cache *D_{(m+2, 1)}* into the block cache (namely, block cache *Kₘ₊₂* as shown in Figure 2) of the block to which the target piece of the transaction data belongs. Then, a next piece of the transaction data (e.g., transaction data *T_{(m+2, 2)}*) in block *m+2* is further processed to merge its to-be-merged write cache. A specific process of the merging such to-be-merged write cache is consistent with that of merging to-be-merged write cache *D_{(m+2, 1)}* of transaction data *T_{(m+2, 1)}.*

Accordingly, parallel execution is implemented for multiple blocks and multiple smart contracts. Hence, a performance of the blockchain network and a throughput of the transaction data are greatly improved.

Reference is made to Figure 3, which is a schematic flowchart of a method for processing data based on a blockchain according to an embodiment of the present disclosure. The method may be executed by the computer device as shown in Figure 1. As shown in Figure 3, a process of the data processing may comprise following steps S101 to S105.

In step S101, transaction data of at least two blocks are added into an execution queue according to a sequence of block heights each corresponding to one of the at least two blocks and a sequence of sequential numbers each corresponding to one piece of the transaction data, and at least two pieces of the transaction data are acquired from the execution queue according to the two sequences. The at least two pieces of the transaction data each carries a piece of contract information.

In an embodiment, acquiring the at least two pieces of the transaction data from the execution queue according to the two sequences comprises following steps. A quantity of idle threads in a pool of parallel-execution threads is determined. The at least two pieces of the transaction data are acquired from the execution queue by the idle threads according to the two sequences, in a case that the quantity is equal to or greater than a threshold for parallel-execution threads. A quantity of transactions of the at least two pieces of the transaction data is equal to the idle quantity.

A specific process of adding the transaction data of at least two blocks into the execution queue according to the sequence of block heights each corresponding to one of the at least two blocks and the sequence of the sequential numbers may refer to description in the foregoing embodiment as shown in Figure 2, and is not repeated herein.

In an embodiment, the at least two pieces of transaction data are from different blocks. Hence parallel execution is implemented among multiple pieces of transaction data from multiple blocks, and the transaction data is processed in the blockchain network with higher efficiency.

Each transaction in the blockchain is a digital record. Herein, one transaction is called one piece of transaction data. The transaction data is broadcasted in the whole blockchain network, and is confirmed and verified through a consensus mechanism in the whole network, which renders the transaction irreversible and prevents tampering on such transaction.

The transactions in the blockchain network may be categorized into confirmed transactions and unconfirmed transactions. A "confirmed" transaction indicates that such transaction is recorded and verified by the blockchain network. For example, when transaction 1 occurs, it is first confirmed at the block recording transaction 1, and is re-confirmed at each block subsequent to such block. After being confirmed for six or more times, the transaction is generally considered to be safe and hard to tamper with. At such time, transaction 1 may be determined as a confirmed transaction.

An "unconfirmed" transaction refers to a transaction which has not been recorded in the blockchain, namely, the transaction data is in a state of being unconfirmed. After the transaction data is broadcasted in the whole network, a blockchain node keeps selecting transaction data from a pool of transactions and records the selected transaction data to generate a block, and the block has not been loaded onto the chain yet. Herein the at least two blocks and blocks in a cached database in following description are all cached blocks, namely, blocks that have not been loaded onto the chain.

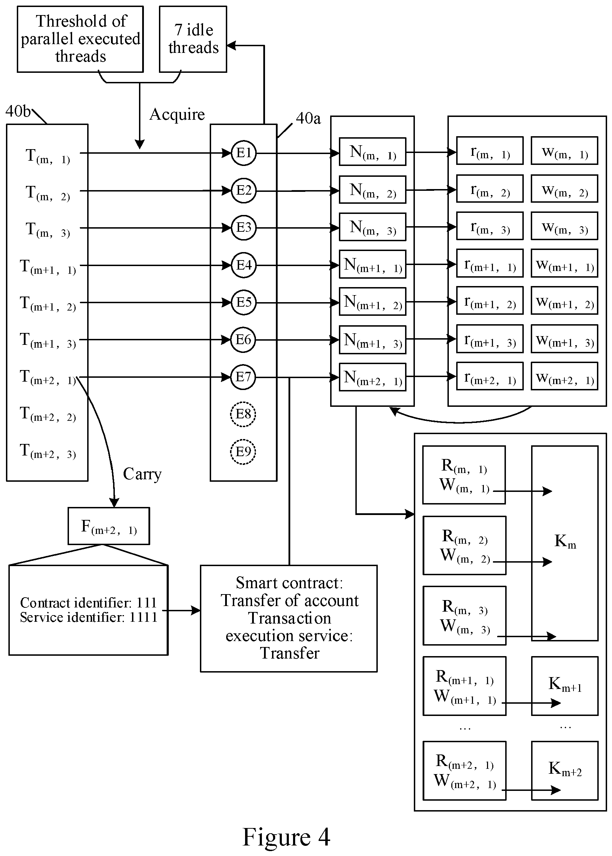

Reference is made to Figure 4, which is a schematic diagram of a scene of data processing based on a block chain according to an embodiment of the present disclosure. As shown in Figure 4, the at least two blocks may comprise 3 blocks, namely block *m*, block *m+1* and block *m+2.* Block *m* may comprise transaction data *T_{(m, 1)},* transaction data *T_{(m, 2)}*, and transaction data *T_{(m, 3)}.* Block *m+1* may comprise transaction data *T_{(m+1, 1)},* transaction data *T_{(m+1, 2)}*, and transaction data *T_{(m+1, 3)}.* Block *m+2* may comprise transaction data *T_{(m+2, 1)},* transaction data *T_{(m+2, 2)}*, and transaction data *T_{(m+2, 3)}.* Therefore, the execution queue 40b may comprise the foregoing 9 pieces of transaction data, which are arranged according to the sequence of block heights each corresponding to one of the at least two blocks and the sequence of sequential numbers each corresponding to one piece of the transaction data.

In the subscript of "transaction data *T_{(a, b)}*"*,* a represents that such piece of the transaction data belongs to block *a*, and *b* represents the sequential number of such piece of the transaction data. a and *b* are both positive integers. *a* is smaller than or equal to a total quantity of the at least two blocks 40b, and *b* is smaller than or equal to a total quantity of pieces of the transaction data in block *a.*

In addition, block *m* may comprise respective contract information carried by transaction data *T_{(m, 1)},* transaction data *T_{(m, 2)}*, and transaction data *T_{(m, 3)}.* Block *m+1* may comprise respective contract information carried by transaction data *T_{(m+1, 1)},* transaction data *T_{(m+1, 2)}*, and transaction data *T_{(m+1, 3)}.* Block *m+2* may comprise respective contract information carried by transaction data *T_{(m+2, 1)},* transaction data *T_{(m+2, 2)}*, and transaction data *T_{(m+2, 3)}.* For example, contract information *F_{(m+2, 1)}* is carried by transaction data *T_{(m+2, 1)},* as shown in Figure 4.

The block cache is constructed in the execution queue 40b for each block. Reference may be further made to the block caches as shown in Figure 2.

The pool 40a of parallel-execution threads may comprises idle thread E1, idle thread E2, idle thread E3, idle thread E4, idle thread E5, idle thread E6, idle thread E7, a busy thread E8, and a busy thread E9. An "idle" thread may represents that such thread is idle, and the "busy" thread may represent that such thread is operating.

Reference is further made to Figure 4. The computer device first determines an idle quantity corresponding to the idle threads in the pool 40a of parallel-execution threads. On a basis of idle thread E1, idle thread E2, idle thread E3, idle thread E4, idle thread E5, idle thread E6, idle thread E7, busy thread E8, and busy thread E9, it is determined that the pool 40a of parallel-execution threads have 7 idle threads at present, and hence the idle quantity is 7. The idle quantity 7 is compared with a threshold for parallel-execution threads. The threshold for parallel-execution threads may be configured according to a hardware condition. For example, the threshold for parallel-execution threads is equal to a half ortwo thirds of a total quantity of threads in the pool 40aof parallel-execution threads. Herein a relationship between the threshold for parallel-execution threads and the total quantity of threads in the pool 40a of parallel-execution threads is not limited, and may be set according to an actual application scenario or another condition.

In a case that the threshold for parallel-execution threads is set to be 8, the idle quantity is smaller than the threshold for parallel-execution threads. In such case, the computer device may not acquire the transaction data from the execution queue 40b based on the two sequences. Alternatively, the computer device may acquire at least two pieces of the transaction data, of which a quantity is equal to the idle quantity, sequentially from the execution queue 40b, and not proceeds to step S102. For example, transaction data *T_{(m, 1)},* transaction data *T_{(m, 2)}*, transaction data *T_{(m, 3)},* transaction data *T_{(m+1, 1)},* transaction data *T_{(m+1, 2)}*, transaction data *T_{(m+1, 3)},* and transaction data *T_{(m+2, 1)}* are acquired. When the idle quantity reaches or exceeds 8, the computer device acquires transaction data *T_{(m+2, 2)},* etc., from the execution queue 40b sequentially through the new idle thread(s), and proceeds to step S102.

In a case that the threshold for parallel-execution threads is set to be 6, the idle quantity is greater than the threshold for parallel-execution threads. In such case, the computer device may acquire 7 pieces of transaction data sequentially from the execution queue 40b through 7 idle threads. For example, transaction data *T_{(m, 1)},* transaction data *T_{(m, 2)}*, transaction data *T_{(m, 3)},* transaction data *T_{(m+1, 1)},* transaction data *T_{(m+1, 2)}*, transaction data *T_{(m+1, 3)},* and transaction data *T_{(m+2, 1)}* are acquired. As shown in Figure 4, transaction data *T_{(m, 1)}* is loaded into idle thread E1, transaction data *T_{(m, 2)}* is loaded into idle thread E2, transaction data *T_{(m, 3)}* is loaded into idle thread E3, transaction data *T_{(m+1, 1)}* is loaded into idle thread E4, transaction data *T_{(m+1, 2)}* is loaded into idle thread E5, transaction data *T_{(m+1, 3)}* is loaded into idle thread E6, and transaction data *T_{(m+2, 1)}* is loaded into idle thread E7.

In step S102, contract provisions indicated in the contract information carried by the at least two pieces of the transaction data are executed in parallel, so as to acquire a read cache and a write cache that are generated when executing each of the contract provisions. A target piece of the transaction data is comprised in the at least two pieces of the transaction data.

In one embodiment, the at least two contract provisions comprise at least two transaction-executing provisions of at least two smart contracts. The smart contracts for executing the at least two pieces of the transaction data, respectively, are determined according to contract identifiers comprised in the at least two pieces of contract information. The transaction-execution provisions invoked by the at least two smart contracts, respectively, for executing the at least two pieces of the transaction data are determined according to provision identifiers comprised in the at least two pieces of the contract information. The at least two transaction-executing provisions are executed in parallel to acquire the read cache and the write cache generated through executing each transaction-executing provision.

A specific process of acquiring parallel-transaction caches (comprising the read caches and the write caches) corresponding to the at least two pieces of transaction data, respectively, may comprise following steps. Initial read caches and initial write cache are created for the at least two pieces of transaction data, respectively, according to the at least two transaction-executing provisions. The at least two transaction-executing provisions are executed in parallel, so as to acquire a piece of read data and a piece of write data (for one of parallel transactions) which are generated through executing each transaction-executing provision. Each piece of read data is stored into the corresponding initial read cache, so as to obtain the read caches for the at least two pieces of transaction data, respectively. Each piece of write data is stored into the corresponding initial write cache, so as to obtain the write caches for the at least two pieces of transaction data, respectively.

The step S101 shows that each piece of transaction data carries its corresponding contract information. For example, as shown in Figure 4, contract information *F_{(m+2, 1)}* is carried by transaction data *T_{(m+2, 1)}* in block *m+2.* The contract information *F_{(m+2, 1)}* comprises a contract identifier. For example, as shown in Figure 4, the contract identifier 111 is an identifier of a fund-transfer contract. The computer device can determine that a smart contract for executing transaction data *T_{(m+2, 1)}* is the fund-transfer contract according to the contract identifier 111. The contract information *F_{(m+2, 1)}* may comprise an provision identifier. For example, as shown in Figure 4, the provision identifier 1111 is an identifier of a transferring provision. The computer device can determine that a transaction-executing provision invoked by the transfer contract for executing transaction data *T_{(m+2, 1)}* is the transferring provision according to the provision identifier 1111.

Similarly, the computer device may determine a smart contract for executing another piece of the transaction data (including transaction data *T_{(m, 1)},* transaction data *T_{(m, 2)}*, transaction data *T_{(m, 3)},* transaction data *T_{(m+1, 1)},* transaction data *T_{(m+1, 2)}* and transaction data *T_{(m+1, 3)}*) and a transaction-executing provision invoked by the smart contract according to the contract information carried by such piece of the transaction data.

The computer device creates respective initial transaction caches for the at least two pieces of the transaction data in the block caches, of the blocks to which these pieces of the transaction data belongs, according to the at least two transaction-executing provisions. The initial transaction cache comprises the initial read cache and the initial write cache. The initial read cache and the initial write cache corresponding to each piece of transaction data are empty sets, when the contract provisions corresponding to the at least two pieces of transaction data have not been executed in parallel. Since no data has been read or modified, the initial read cache and the initial write cache are not separately depicted in Figure 4, and both are represented by the initial transaction cache.

As shown in Figure 4, the initial transaction cache may include initial transaction cache *N_{(m, 1)}* corresponding to transaction data *T_{(m, 1)},* initial transaction cache *N_{(m, 2)}* corresponding to transaction data *T_{(m, 2)}*, initial transaction cache *N_{(m, 3)}* corresponding to transaction data *T_{(m, 3)},* initial transaction cache *N_{(m+1, 1)}* corresponding to transaction data *T_{(m+1, 1)}*, initial transaction cache *N_{(m+1, 2)}* corresponding to transaction data *T_{(m+1, 2)}*, initial transaction cache *N_{(m+1, 3)}* corresponding to transaction data *T_{(m+1, 3)},* and initial transaction cache *N_{(m+2, 1)}* corresponding to transaction data *T_{(m+2, 1)}*. The initial transaction cache *N_{(m, 1)},* the initial transaction cache *N_{(m, 2)}*, the initial transaction cache *N_{(m, 3)},* the initial transaction cache *N_{(m+1, 1)},* the initial transaction cache *N_{(m+1, 2)}*, the initial transaction cache *N_{(m+1, 3)}* and the initial transaction cache *N_{(m+2, 1)}* are all empty sets.

Reference is further made to Figure 4. The computer device executes the transaction-executing provisions corresponding to transaction data *T_{(m, 1)},* transaction data *T_{(m, 2)}*, transaction data *T_{(m, 3)},* transaction data *T_{(m+1, 1)},* transaction data *T_{(m+1, 2)}*, transaction data *T_{(m+1, 3)},* and transaction data *T_{(m+2, 1)},* respectively, in parallel through idle thread E1, idle thread E2, idle thread E3, idle thread E4, idle thread E5, idle thread E6 and idle thread E7.

The computer device acquires the read data and the write data generated by executing each transaction-executing provision. As shown in Figure 4, the read data may comprise read data *r_{(m, 1)}* corresponding to transaction data *T_{(m, 1)},* read data *r_{(m, 2)}* corresponding to transaction data *T_{(m, 2)},* read data *r_{(m, 3)}* corresponding to transaction data *T_{(m, 3)},* read data *r_{(m+1, 1)}* corresponding to transaction data *T_{(m+1, 1)},* read data *r_{(m+1, 2)}* corresponding to transaction data *T_{(m+1, 2)}*, read data *r_{(m+1, 3)}* corresponding to transaction data *T_{(m+1, 3)},* and read data *r_{(m+2, 1)}* corresponding to transaction data *T_{(m+2, 1)}*.

The write data may comprise write data *W_{(m, 1)}* corresponding to transaction data *T_{(m, 1)},* write data *W_{(m, 2)}* corresponding to transaction data *T_{(m, 2)}*, write data *W_{(m, 3)}* corresponding to transaction data *T_{(m, 3)},* write data *W_{(m+1, 1)}* corresponding to transaction data *T_{(m+1, 1)},* write data *W_{(m+1, 2)}* corresponding to transaction data *T_{(m+1, 2)}*, write data *W_{(m+1, 3)}* corresponding to transaction data *T_{(m+1, 3)},* and write data *W_{(m+2, 1)}* corresponding to transaction data *T_{(m+2, 1)}*.

The computer device stores each piece of read data into the corresponding initial read cache, so as to obtain respective read caches corresponding to the at least two pieces of transaction data. As shown in Figure 4, the computer device stores read data *r_{(m, 1)}* into initial transaction cache *N_{(m, 1)}* (comprising an initial read cache) corresponding to transaction data *T_{(m, 1)}* to obtain read cache *R_{(m, 1)}* corresponding to transaction data *T_{(m, 1)},* stores read data *r_{(m, 2)}* into initial transaction cache *N_{(m, 2)}* (comprising an initial read cache) corresponding to transaction data *T_{(m, 2)}* to obtain read cache *R_{(m, 2)}* corresponding to transaction data *T_{(m, 2)}*, and stores read data *r_{(m, 3)}* to initial transaction cache *N_{(m, 3)}* (comprising an initial read cache) corresponding to transaction data *T_{(m, 3)}* to obtain read cache *R_{(m, 3)}* corresponding to transaction data *T_{(m, 3)}.* The computer device stores read data *r_{(m+1, 1)}* into initial transaction cache *N_{(m+1, 1)}* (comprising an initial read cache) corresponding to transaction data *T_{(m+1, 1)}* to obtain read cache *R_{(m+1, 1)}* corresponding to transaction data *T_{(m+1, 1)},* ..., and stores read data *r_{(m+2, 1)}* into initial transaction cache *N_{(m+2, 1)}* (comprising an initial read cache) corresponding to transaction data *T_{(m+2, 1)}* to obtain read cache *R_{(m+2, 1)}* corresponding to transaction data *T_{(m+2, 1)}.*

The computer device stores each piece of write data into the corresponding initial write cache, so as to obtain respective write caches corresponding to the at least two pieces of transaction data. As shown in Figure 4, the computer device stores write data *W_{(m, 1)}* into initial transaction cache *N_{(m, 1)}* (comprising an initial write cache) corresponding to transaction data *T_{(m, 1)}* to obtain a write cache *W_{(m, 1)}* corresponding to transaction data *T_{(m, 1)},* stores read data *W_{(m, 2)}* into initial transaction cache *N_{(m, 2)}* (comprising an initial write cache) corresponding to transaction data *T_{(m, 2)}* to obtain write cache *W_{(m, 2)}* corresponding to transaction data *T_{(m, 2)}*, and stores write data *w_{(m, 3)}* into initial transaction cache *N_{(m, 3)}* (comprising an initial write cache) corresponding to transaction data *T_{(m, 3)}* to obtain write cache *W_{(m, 3)}* corresponding to transaction data *T_{(m, 3)}.* The computer device stores write data *w_{(m+1, 1)}* into initial transaction cache *N_{(m+1, 1)}* (comprising an initial write cache) corresponding to transaction data *T_{(m+1, 1)}* to obtain write cache *W_{(m+1, 1)}* corresponding to transaction data *T_{(m+1, 1)},* ..., and stores write data *W_{(m+2, 1)}* into initial transaction cache *N_{(m+2, 1)}* (comprising an initial write cache) corresponding to transaction data *T_{(m+2, 1)}* to obtain write cache *W_{(m+2, 1)}* corresponding to transaction data *T_{(m+2, 1)}*.

In a case the that there is no conflict, i.e., no intersection, among the read data corresponding to the at least two pieces of transaction data, the write data corresponding to the at least two pieces of transaction data may be merged into corresponding block caches (e.g., block caches *Kₘ₊₂, Kₘ₊₁* and *Kₘ*) as shown in Figure 4. In practice, there may be a conflict among the at least two pieces of the read data. Hence, the write data cannot be directly merged into the corresponding block caches. It is necessary to perform a check of data confliction sequentially on the at least two pieces of read data, and then it is determined whether the write caches may be merged into the block caches based on according to a result of the check. Merging of each write cache takes place after merging have been completed on all previous transactions (comprising transaction data in previous blocks and previous transactions in the current block). A specific process refers to following steps S103 to S105.

In step S103, a merged write cache is determined from block caches of the at least two blocks, and an updated read cache for the target piece of the transaction data is acquired from the merged write caches. A piece of the transaction data that corresponds to the merged write cache is previous to the target piece of the transaction data with respect to a position in the execution queue or a time point of being added into the execution queue.

In an embodiment, determining the merged write cache from the block caches of the at least two blocks may comprise following steps. A target block to which the target piece of the transaction data belongs is acquired, and a target block height of the target block is determined. A merged piece of the transaction data in the target block is determined according to the sequence of the sequential numbers of the transaction data, where the sequential number corresponding to the merged piece of the transaction data is smaller than the sequential number corresponding to the target piece of the transaction data. A merged block is determined from the at least two blocks according to the target block height, where a block height corresponding to the merged block is smaller than the target block height. The write cache in the block cache of the merged block and the write cache of the merged pieced of the transaction data are determined to serve as the merged write caches.

For example, the merged write caches are traversed according to a sequence of decreasing block heights and a sequence of decreasing sequential numbers, until the merged write cache to be read for the target piece of the transaction data is acquired. An updated read cache is generated according to the merged write cache to be read for the target piece of the transaction data.

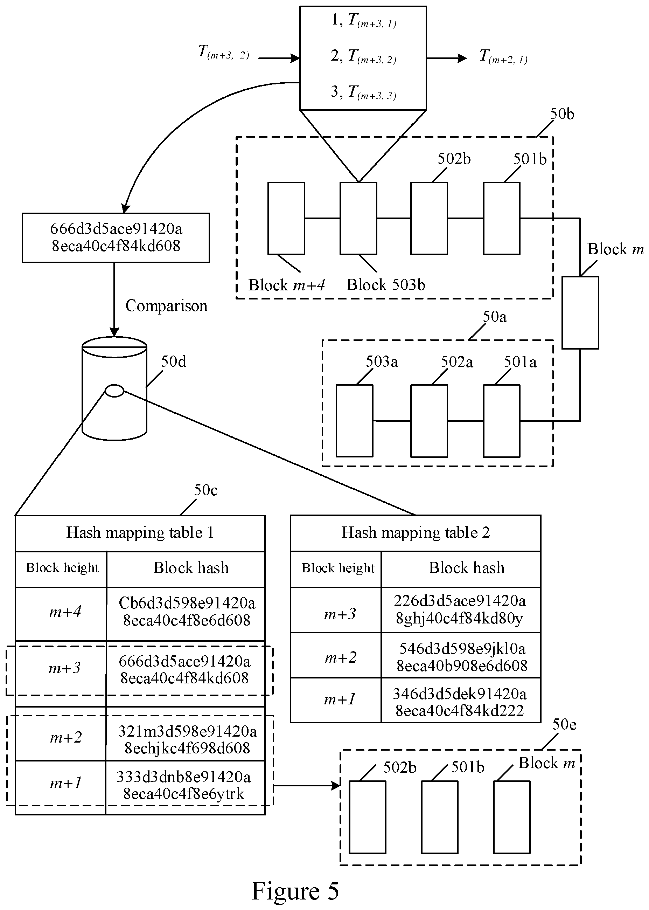

Reference is further made to Figure 5, which is a schematic diagram of a scene of data processing based on a blockchain according to an embodiment of the present disclosure. In order to facilitate understanding and description, block m is assumed to be the first block in a cached database 50d, that is, the block heights of other blocks in the cached database 50d are all greater than or equal to the block height of block m. All blocks in the cached database 50d are cached blocks, that is, blocks which have not been loaded onto the chain. Each block having a block height smaller than that of block m is an on-chain block, that is, a blocks which has been loaded onto the chain.

As shown in Figure 5, the computer device acquires the target block to which the target piece, i.e., the transaction data *T_{(m+3, 2)}*, belongs. Obviously, the target piece of the transaction data *T_{(m+3, 2)}* is the second transaction data in block 503b, an hence the target block is block 503b, and the block height of block 503b is *m+3.* Block 503b may comprise transaction data *T_{(m+3, 1)},* the target piece (transaction data *T_{(m+3, 2)}*)*,* and transaction data *T_{(m+3, 3)}.* The computer device may determine that transaction data *T_{(m+3, 1)}* in the target block (namely, block 503b) is a merged piece of the transaction data according to the sequence of sequential numbers.

The at least two blocks described in the step S103 do not belong to a fork blockchain, that is, the blockchain network has only a major chain. In such case, the merged block(s) may be determined according to the target block height of the target block, and the block height of each merged block is smaller than the target block height. The computer device determines the write cache(s) in the block cache of each merged block and the write cache(s) corresponding to the merged piece(s) of the transaction data as the merged write caches.

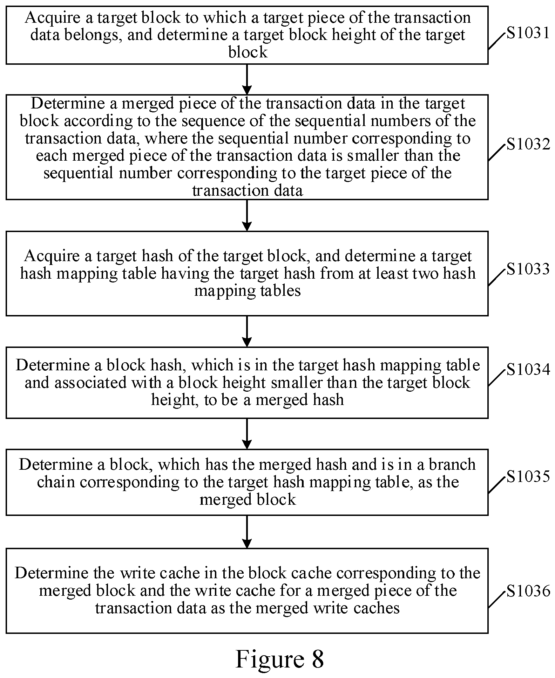

In an embodiment, the at least two blocks belong to a fork blockchain. Such case refers to an embodiment as shown in Figure 8, and is not illustrated here.

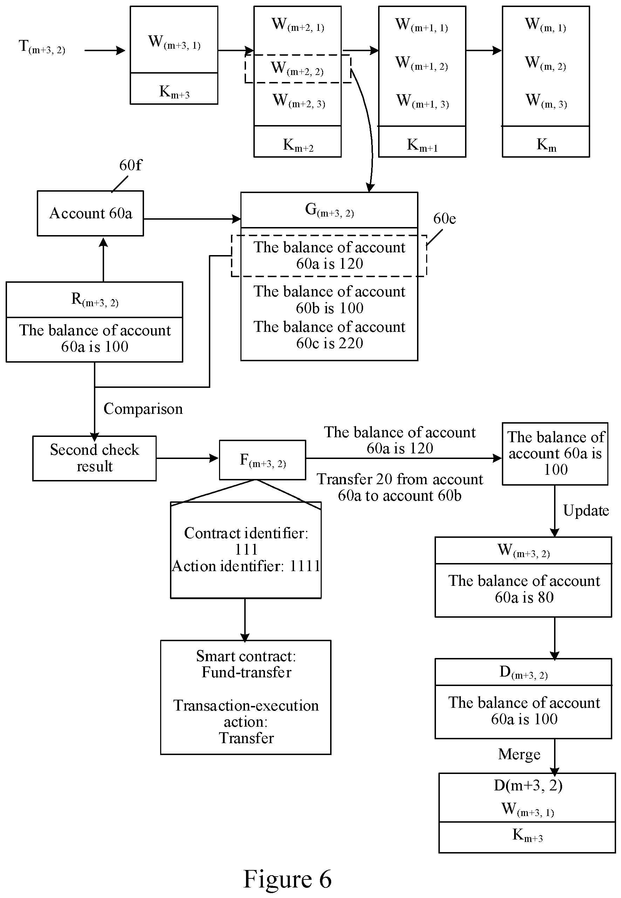

Reference is further made to Figure 6, which is a schematic diagram of a scene of data processing based on a blockchain according to an embodiment of the present disclosure. The computer device traverses the merged write caches according to a sequence of decreasing block heights and a sequence of decreasing sequential numbers. The merged write caches may comprise write cache *W_{(m+2, 1)},* write cache *W_{(m+2, 2)}*, and write cache *W_{(m+2, 3)}* in block cache *Kₘ₊₂,* further comprise write cache *W_{(m+1, 1)},* write cache *W_{(m+1, 2)}*, and write cache *W_{(m+1, 3)}* in block cache *Kₘ₊₁,* further comprises write cache *W_{(m, 1)},* write cache *W_{(m, 2)}*, and write cache *W_{(m, 3)}* in block cache *Kₘ,* and further comprises write cache *W_{(m+3, 1)}* in block cache *Kₘ₊₃.*

Therefore, the computer device first traverses write cache *W_{(m+3, 1)},* determines write cache *W_{(m+3, 1)}* as the updated read cache in a case that write cache *W_{(m+3, 1)}* records data to be read for the target piece, i.e., transaction data *T_{(m+3, 2)}*, and transverses write cache *W_{(m+2, 3)}* in a case that write cache *W_{(m+3, 1)}* does not record data to be read for transaction data *T_{(m+3, 2)}.* Similarly, the computer device determines write cache *W_{(m+2, 3)}* as the updated read cache in a case that write cache *W_{(m+2, 3)}* records the data to be read for transaction data *T_{(m+3, 2)}*, and traverses a next write cache in a case that write cache *W_{(m+2, 3)}* does not record the data to be read for transaction data *T_{(m+3, 2)}.* The process is performed until the merged write cache to be read for transaction data *T_{(m+3, 2)}* is obtained, and then the computer device generates the updated read cache according to the merged write cache to be read by the target piece of the transaction data. As shown in Figure 6, write cache *W_{(m+2, 2)}* serves as updated read cache *G_{(m+3, 2)}.*

In step S104, a to-be-merged write cache is determined forthe target piece of the transaction data according to the updated read cache, the read cache for the target piece of the transaction data, and the write cache for the target piece of the transaction data.

In one embodiment, the step S104 is implemented through following steps. Inconsistency on read data are checked between the read cache for the target piece of the transaction data and the updated read cache to obtain a check result. Then, the to-be-merged write cache for the target piece of the transaction data is determined according to the check result and the write cache for the target piece of the transaction data.

In one embodiment, checking the inconsistency on read data between the read cache forthe target piece of the transaction data and the updated read cache to obtain the check result comprises following steps. The read data in the read cache for the target piece of the transaction data is determined as target read data. A target object of the target read data is determined, and updated read data associated with the target object is acquired from the updated read cache. The target read data and the updated read data are checked for the inconsistency to obtain the check result.

The check result includes a first check result and a second check result. A specific process of obtaining the check result may comprise follow steps. The target read data is compared with the updated read data. The check result is determined to be the first check result in a case that the target read data is identical to the updated read data, and the first check result indicates that there is no inconsistency for read data between the target read data and the updated read data. The check result is determined to be the second check result in a case that the target read data is different from the updated read data, and the second check result indicates that there is the inconsistency between the target read data and the updated read data.

A specific process of determining the to-be-merged write cache for the target piece of the transaction data may comprise following steps. The write cache for target piece of the transaction data is determined to serve as the to-be-merged write cache for the target piece of the transaction data, in a case that the check result is the first check result. The to-be-merged write cache for the target piece of the transaction data is generated according to the updated read data and the contract information carried by the target piece of the transaction data, in a case that the check result is the second check result.

A specific process of generating the to-be-merged write cache for the target piece of the transaction data may comprise following steps. A target smart contract for executing the target piece of the transaction data is determined according to a contract identifier in the contract information carried by the target piece of the transaction data. A target transaction-executing provision invoked by the target smart contract for executing the target piece of the transaction data is determined according to an provision identifier in the contract information carried by the target piece of the transaction data. The target transaction-executing provision is executed according to the updated read data and the target piece of the transaction data to acquire a target result of the target piece of the transaction data. The write cache for the target piece of the transaction data is updated according to the target result to obtain the to-be-merged write cache for the target piece of the transaction data.

Reference is further made to Figure 6 in conjunction with the step S103. Updated read cache *G_{(m+3, 2)}* for the target piece of the transaction data, i.e., target transaction data *T_{(m+3, 2)}*, is write cache *W_{(m+2, 2)}.* The updated read cache may comprise one or more merged write caches. For example, there are multiple target objects of the target piece of the transaction data, and the updated read cache may be obtained as the merged write caches to which multiple target objects belong, respectively.

The computer device determines the target read data to be the read data in read cache *R_{(m+3, 2)}* corresponding to target transaction data *T_{(m+3, 2)}*, i.e., the read data "the balance of account 60a is 100" as shown in Figure 6. The target object 60f of the target read data is determined to be account 60a as shown in in Figure 6.

Updated read cache *G_{(m+3, 2)}* may comprise 3 pieces of read data, namely, read data "the balance of account 60a is 120", read data "the balance of account 60b is 100", and read data "the balance of account 60c is 220". The computer device acquires updated read data 60e in the updated read cache *G_{(m+3, 2)}* according to the target object 60f, namely, acquires read data "the balance of account 60a is 120" as shown in Figure 6.

The computer device compares the target read data (namely, read data "the balance of account 60a is 100") with the updated read data 60e (namely, read data "the balance of account 60a is 120"). Apparently, the target read data and the updated read data 60e do not match, i.e., there is the inconsistency on read data between the target read data and the updated read data 60e, and the check result is determined to be the second check result. As shown in Figure 6, the computer device acquires contract information *F_{(m+3, 2)}* of target transaction data *T_{(m+3, 2)}*, determines that the target smart contract for executing target transaction data *T_{(m+3, 2)}* is a fund-transfer contract according to the contract identifier 111 in contract information *F_{(m+3, 2)}*, and determines that the target transaction-executing provision invoked by the fund-transfer contract for executing target transaction data *T_{(m+3, 2)}* is a transferring provision according to the provision identifier 1111 in contract information *F_{(m+3, 2)}.*

Reference is further made to Figure 6. The computer device executes the target transaction-executing provision according to the updated read data 60e (namely, read data "the balance of account 60a is 120") and target transaction data *T_{(m+3, 2)}* (i.e., 20 is transferred from account 60a to account 60b, as shown in Figure 6) to acquire the target result of target transaction data *T_{(m+3, 2)}.* As shown in Figure 6, the execution result is "the balance of account 60a is 100". The target write data in write cache *W_{(m+3, 2)}* is "the balance of account 60a is 80" according to the target read data (namely, read data "the balance of account 60a is 100") and target transaction data *T_{(m+3, 2)}.*

The computer device updates write cache *W_{(m+3, 2)}* corresponding to target transaction data *T_{(m+3, 2)}* according to the target result, i.e., "the balance of account 60a is 100", to obtain to-be-merged write cache *D_{(m+3, 2)}* of target transaction data *T_{(m+3, 2)}*, as shown in Figure 6.

Optionally, in a case that the target read data is identical to the updated read data 60e, it can be determined that the check result is the first check result. The first check result indicates that there is no inconsistency between the target read data and the updated read data 60e. Hence, the computer device may determine write cache *W_{(m+3, 2)}* corresponding to target transaction data *T_{(m+3, 2)}* to serve as the to-be-merged write cache *D_{(m+3, 2)}* of target transaction data *T_{(m+3, 2)}.*

The inconsistency check ensures correctness of the to-be-merged write cache. Thus the transaction data is processed with higher efficiency while ensuring data correctness of the block caches.

In step S105, the to-be-merged write cache of the target piece of the transaction data is merged into the block cache of a block to which the target piece of the transaction data belongs. Then, a piece of the transaction data subsequent to the target piece of the transaction data in the que may be processed to merge the to-be-merged write cache of the subsequent piece of the transaction data.

Reference is further made to Figure 6. To-be-merged write cache *D_{(m+3, 2)}* of target transaction data *T_{(m+3, 2)}* is merged into block cache *Kₘ₊₃* of the block to which target transaction data *T_{(m+3, 2)}* belongs.

A process for merging the to-be-merged write cache corresponding to the subsequent piece of transaction data in the execution queue is consistent with the process for merging the to-be-merged write cache corresponding to target transaction data *T_{(m+3, 2)},* and is not illustrated herein.

The block cache corresponding to each block is always stored in the cached database 50d and not written into the ledger (i.e., not loaded onto the chain), before a consensus module determines that the block can be loaded onto the chain. When the block is determined to be loaded onto the chain, namely, when the block passes the consensus, the data in the block cache in the cached database 50d can be written into the ledger along with the block.

A performance of the blockchain may restrict application scenes of the blockchain. Indexes of the performance of the blockchain mainly include two aspects: a transaction throughput and a temporal delay. The transaction throughput represents a quantity of transactions which can be processed by the blockchain network at certain time. The time delay represents a response to a transaction and time consumed by processing a transaction in the blockchain network.

In practice, both aspects should be considered. It is not appropriate to consider the transaction throughput while ignoring the time delay, because a late response to transactions can hinder usage of users hamper the users' experience. The time delay can be shorted by reducing a quantity of transactions in a block, but ignoring the transaction throughput may results in that a large number of transactions are stranded in the execution queue. Some platforms need to process a large number of concurrent users, and hence technical solutions having low transaction throughput would be abandoned.

The above issue cannot be solved by simply improving a size of the block, because transmission and verification on the block consumes time. An oversized block would exacerbate inconsistency among network nodes (more bifurcations), and hence affect reliability of the blockchain network deeply. Technical solutions of the present disclosure consider both the transaction throughput and the time delay of processing transactions. Multiple blocks as well as multiple contracts in one block are processed in parallel, which increases a speed of processing the blocks. The time delay of processing transactions can be reduced, and the transaction throughput of the blockchain can be improved.

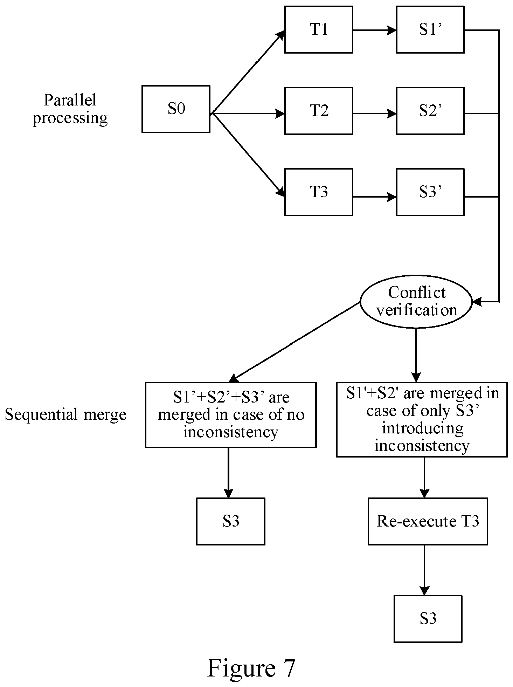

Reference is made to Figure 7, which is a schematic flowchart of a method for processing data based on a blockchain according to an embodiment of the present disclosure. As shown in Figure 7, S0, S1', S2', etc. indicates storage states of data. For example, S0 represents original data and may be treated as a piece of read data as shown in in Figure 3, S1' represents modified data after processing a transaction request T1 (and may be treated as a piece of write data as shown in Figure 3), S2' represents modified data after processing a transaction request T2 (and may be treated as a piece of write data as shown in Figure 3), S3' represents modified data after processing a transaction request T3 (and may be treated as a piece of write data as shown in Figure 3), and S3 is a block cache after merging the to-be-merged write caches corresponding to the transaction request T1, the transaction request T2, and the transaction request T3.

The above transaction requests all comprise a request for invoking a contract, that is, comprise the contract information as shown in Figure 3. With reference to a combination of an embodiment as shown in Figure 3 and Figure 7, parallel execution of the contract provisions may comprise 3 major steps as follows.
1. Parallel Processing. The contract provisions in the transaction requests are executed in parallel.
2. Inconsistency Check. It is checked based on the sequences whether the parallel execution is reasonable.
3. Transaction Merge. The execution results of the contract provisions are merged into the block cache.

After the inconsistency check, S1', S2', and S3' are merged to obtain S3 in a case that there is no inconsistency (for example, as shown in Figure 7, merging is S1'+S2'+S3' when there is no inconsistency). In a case that that only S3' introduces inconsistency, S1' and S2' are merged (for example, as shown in Figure 7, merging is S1'+S2' when there is the inconsistency), and then T3 is executed again to obtain S3.

A specific process may refer to an embodiment corresponding to Figure 3, and is not repeated herein.

In embodiments of the present disclosure, the contract provisions corresponding to the at least two pieces of the transaction data can be executed in parallel according to the respective contract information carried by the at least two pieces of transaction data. The at least two pieces of transaction data are sequenced according to the block heights and the sequential numbers of the pieces of the transaction data. The read cache and the write cache generated by executing each contract provision are acquired. The read cache for the target piece of the transaction data may be an outdated read cache. Thus, the merged write cache is first determined within the block caches for the at least two blocks, and then the updated read cache for the target piece of the transaction data is acquired from the merged write caches. Piece(s) of the transaction data corresponding to the merged write cache(s) is previous to the target piece of the transaction data with respect to the position in the execution queue or the time point of being added into the execution queue. It can be determined based on the updated read cache whether the read cache for the target piece of the transaction data is outdated, and then the to-be-merged write cache of the target piece of the transaction data may be determined according to the updated read cache and the write cache for the target piece of the transaction data. In one aspect, multiple pieces of transaction data are executed in parallel, thus efficiency of processing the transaction data is improved in the blockchain network, and it is less likely that a large amount of transaction data jams in the execution queue. In another aspect, after the multiple pieces of transaction data are executed in parallel, the updated read cache can be acquired for each piece of the transaction data according to the merged write cache corresponding to such each piece of the transaction data, then it is determined based on such updated read cache whether the corresponding read cache is outdated. Thereby, the read cache and the write cache are checked to ensure correctness of the to-be-merged write cache. That is, data correctness in the block caches can be ensured while efficiency of processing the transaction data is improved.

Reference is made to Figure 8, which is a schematic flowchart of a method for processing data based on a blockchain according to an embodiment of the present disclosure. As shown in Figure 8, the method may comprise following steps S1031 to S1036. The steps S1031 to S1036 form a specific embodiment of the step S103 in an embodiment as shown in Figure 3.

In step S1031, a target block to which a target piece of the transaction data belongs is acquired, and a target block height of the target block is determined.

In step S1032, a merged piece of the transaction data is determined in the target block according to the sequence of the sequential numbers of the transaction data. The sequential number corresponding to each merged piece of the transaction data is smaller than the sequential number corresponding to the target piece of the transaction data.

A specific process of steps S1031 and S1032 may refer to the step 103 in an embodiment as shown in Figure 3, and is not repeated herein.

In step S1033, a target hash of the target block is acquired, and a target hash mapping table having the target hash is determined from at least two hash mapping tables.

In one embodiment, the at least two blocks belong to a fork blockchain, and the fork blockchain has hash mapping tables corresponding to at least two branch chains, respectively. Each hash mapping table indicates association between block heights and block hashes of the corresponding branch chain.

In the blockchain, a miner produces a block and links the block to a major chain. Generally, only one block is generated at one time. In a case that two blocks are generated at the same time, there would be two blockchains in the entire network, which are identical in length and transaction information in the blocks while different in miner signatures or transaction sequences. Such case is called a Fork, and the blockchains may be called a fork blockchain.

As shown in Figure 5, the blockchain to which the target block belongs is a fork blockchain. The fork blockchain may comprise two branch chains. One branch chain comprises block *m* and fork blocks 50b which may comprise block 501b, block 502b, block 503b, and block *m+4.* The block height of block *m* is equal to *m,* the block height of block 501b is equal to *m+1,* the block height of block 502b is equal to *m+2,* the block height of block 503b is equal to *m+3,* and the block height of block *m+4* is equal to *m+4.* The other branch chain comprises block *m* and fork blocks 50a which may comprise block 501a, block 502a, and block 503a. The block height of block 501a is equal to *m+1,* the block height of block 502a is equal to *m+2,* and the block height of block 503a is equal to *m+3.*

Reference is further made to Figure 5. The at least two blocks may comprise block m, block 501b, block 502b, block 503b, block *m+4,* block 501a, block 502a, and block 503a. Obviously, the block heights of block 501b and block 501a are identical and equal to *m+1,* the block heights of block 502b and block 502a are identical and equal to *m+2,* and the block heights of block 503b and block 503a are identical and equal to *m+3.* Therefore, chaos may occur in a case that only the block height serves as a basis of acquiring the merged block(s) of the target block (i.e., block 503b) from the at least two blocks. The block height of the previous block of block 503b should be *m+2.* As shown in the Figure 5, there are two blocks having the block height of *m+2,* i.e., block 502b and block 502a. Therefore, it is necessary to propose a solution for determining the merged block(s) accurately for the target block.

In this embodiment, the hash mapping tables are configured for the fork blockchain in the cached database 50d. Each hash mapping table indicates association between the block heights of blocks, which are on the corresponding branch chain, and hashes of the blocks. The merged block(s) of the target block is determined based on the block height and the hash mapping tables. As shown in Figure 5, the cached database 50d comprises two hash mapping tables, namely, hash mapping table 1 and hash mapping table 2. The block heights in hash mapping table 1 may comprise block height *m+4*, block height *m+3,* block height *m+2,* and block height *m+1.* The block hashes in the hash mapping table 1 may comprise block hash Cb6d3d598e91420a8eca40c4f8e6d608 corresponding to block height *m+4*, block hash 666d3d5ace91420a8eca40c4f84kd608 corresponding to block height *m+3,* block hash 321m3d598e91420a8echjkc4f698d608 corresponding to block height *m+2,* and block hash 333d3dnb8e91420a8eca40c4f8e6ytrk corresponding to block height *m+1.*

The block heights in the hash mapping table 2 may comprise block height *m+3,* block height *m+2,* and block height *m+1.* The block hashes in the hash mapping table 2 may comprise block hash 226d3d5ace91420a8ghj40c4f84kd80y corresponding to block height *m+3,* block hash 546d3d598e9jkl0a8eca40b908e6d608 corresponding to block height *m+2,* and block hash 346d3d5dek91420a8eca40c4f84kd222 corresponding to block height *m+1.*

The computer device acquires the target hash of the target block, such as block hash 666d3d5ace91420a8eca40c4f84kd608 as shown in Figure 5. The computer device compares the target hash with the block hashes in the two hash mapping tables, and determines a hash mapping table comprising the target hash, i.e., the hash mapping table 1 shown in Figure 5, from the two hash mapping tables as the target hash mapping table 50c according to a result of the comparison. In such case, the computer device determines that the target block is from the branch chain corresponding to the hash mapping table 1, and accordingly determines the branch chain comprising the target block as a target branch chain. The target branch chain comprises fork blocks 50b, i.e., block 501b, block 502b, block 503b, and block *m+4.*

In step S1034, a block hash, which is in the target hash mapping table and associated with a block height smaller than the target block height, is determined to be a merged hash.

For example, the computer device determines the block heights (i.e., *m+2* and *m+1* as shown in Figure 5) which are in the target hash mapping table and smaller than the target block height (i.e., *m+3)* as merged fork blocks heights, and determines the fork block hashes associated with the merged fork block heights as merged fork block hashes, for example, block hash 321m3d598e91420a8echjkc4f698d608 and block hash 333d3dnb8e91420a8eca40c4f8e6ytrk as shown in Figure 5.

In step S1035, a block, which has the merged hash and is in a branch chain corresponding to the target hash mapping table, is determined as the merged block.

In the branch chain corresponding to the target hash mapping table, i.e., the target branch chain, the block(s) corresponding to the merged fork block hash(es) are determined to be the merged fork block(s), i.e., block 502b and block 501b. Further considering block *m* on the major chain, the merged blocks 50e of the target block are determined to comprise block 502b, block 501b, and block *m.* The computer device determines the write caches in the block cache(s) corresponding to the merged block(s) and the write cache(s) corresponding to the merged pieces(s) of transaction data to be the merged write caches. As shown in Figure 5 and Figure 6, the merged pieces of the transaction data comprises transaction data *T_{(m+3, 1)},* and the merged blocks comprise block 502b, block 501b, and block *m.*

In step S1036, the write cache in the block cache corresponding to the merged block and the write cache for a merged piece of the transaction data are determined as the merged write caches.

The write caches in the block caches (block cache *Kₘ₊₂,* block cache *Kₘ₊₁,* and block cache *Kₘ* as shown in Figure 6) corresponding to the merged blocks comprise write cache *W_{(m+2, 1)},* write cache *W_{(m+2, 2)}*, write cache *W_{(m+2, 3)},* write cache *W_{(m+1, 1)},* write cache *W_{(m+1, 2)}*, write cache *W_{(m+1, 3)},* write cache *W_{(m, 1)},* write cache *W_{(m, 2)}*, and write cache *W_{(m, 3)}.* The write caches corresponding to the merged pieces of the transaction data comprise a write cache *W_{(m+3, 1)}* in the block cache *Kₘ₊₃.*

The block cache corresponding to each block is always stored in the cached database 50d and not written into the ledger (not loaded onto the chain) before a consensus module determines that the block can be loaded onto chain. Therefore, embodiments of the present disclosure support a blockchain fork. When the block is determined to be loaded on the chain (where the block is in a longest branch such as the target branch chain as shown in Figure 5), namely, when the block passes a consensus, the data in the block cache(s) in the cached database 50d can be written into the ledger along with the block(s).

Therefore, when there is a fork block in the blockchain, the hash mapping tables may be provided in the blockchain network. Herein the multiple blocks and the multiple contract provisions can be executed in parallel in the blockchain network, and the multiple blocks can comprise the fork block.

In embodiments of the present disclosure, the contract provisions corresponding to the at least two pieces of the transaction data can be executed in parallel according to the respective contract information carried by the at least two pieces of transaction data. The at least two pieces of transaction data are sequenced according to the block heights and the sequential numbers of the pieces of the transaction data. The read cache and the write cache generated by executing each contract provision are acquired. The read cache for the target piece of the transaction data may be an outdated read cache. Thus, the merged write cache is first determined within the block caches for the at least two blocks, and then the updated read cache for the target piece of the transaction data is acquired from the merged write caches. Piece(s) of the transaction data corresponding to the merged write cache is previous to the target piece of the transaction data with respect to the position in the execution queue or the time point of being added into the execution queue. It can be determined based on the updated read cache whether the read cache for the target piece of the transaction data is outdated, and then the to-be-merged write cache of the target piece of the transaction data may be determined according to the updated read cache and the write cache for the target piece of the transaction data. In one aspect, multiple pieces of transaction data are executed in parallel, thus efficiency of processing the transaction data is improved in the blockchain network, and it is less likely that a large amount of transaction data jams in the execution queue. In another aspect, after the multiple pieces of transaction data are executed in parallel, the updated read cache can be acquired for each piece of the transaction data according to the merged write cache corresponding to such each piece of the transaction data, then it is determined based on such updated read cache whether the corresponding read cache is outdated. Thereby, the read cache and the write cache are checked to ensure correctness of the to-be-merged write cache. That is, data correctness in the block caches can be ensured while efficiency of processing the transaction data is improved.

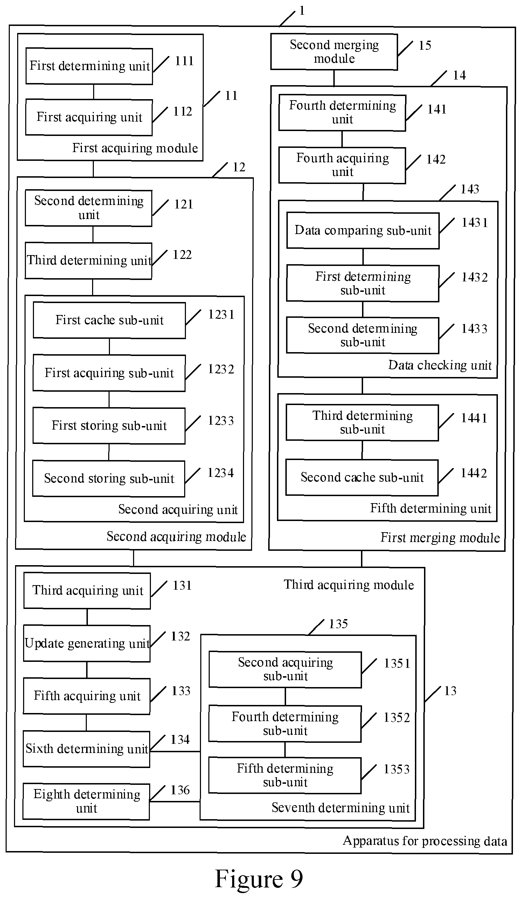

Reference is made to Figure 9, which is a schematic structural diagram of an apparatus for processing data based on a blockchain according to an embodiment of the present disclosure. The apparatus may be a computer program (comprising program codes) running in a computer device, for example, the apparatus for processing data is application software. The apparatus is configured to execute corresponding steps in a method according to embodiments of the present disclosure. As shown in Figure 9, the apparatus 1 for processing data may comprise a first acquiring module 11, a second acquiring module 12, a third acquiring module 13, a first merging module 14, and a second merging module 15.

The first acquiring module 11 is configured to add transaction data of at least two blocks into an execution queue according to a sequence of block heights each corresponding to one of the at least two blocks and a sequence of sequential numbers each corresponding to one piece of the transaction data, and acquire at least two pieces of the transaction data from the execution queue according to the two sequences, where the at least two pieces of the transaction data each carries a piece of contract information.

The second acquiring module 12 is configured to execute, in parallel, contract provisions indicated in the contract information carried by the at least two pieces of the transaction data, where a read cache and a write cache are generated when executing each of the contract provisions.

The third acquiring module 13 is configured to determine merged write caches from block caches of the at least two blocks, and acquire, from the merged write caches, an updated read cache for a target piece of the at least two pieces of the transaction data, where a piece of the transaction data that corresponds to the merged write cache is previous to the target piece of the transaction data with respect to a position in the execution queue or a time point of being added into the execution queue.

The first merging module 14 is configured to determine a to-be-merged write cache for the target piece of the transaction data according to the updated read cache, the read cache forthe target piece of the transaction data, and the write cache forthe target piece of the transaction data.

The second merging module 15 is configured to merge the to-be-merged write cache of the target piece of the transaction data into the block cache of a block to which the target piece of the transaction data belongs. Then, a piece of the transaction data subsequent to the target piece of the transaction data in the execution queue may be processed to merge the to-be-merged write cache of the subsequent piece of the transaction data. Specific implementations of functions of the first acquiring module 11, the second acquiring module 12, the third acquiring module 13, the first merging module 14 and the second merging module 15 may refer to the steps S101 to S105 in an embodiment as shown in Figure 3, and are not illustrated herein.

The at least two pieces of the transaction data are from different blocks.

Reference is further made to Figure 9. The first acquiring module 11 may comprise a first determining unit 111 and a first acquiring unit 112.

The first determining unit 111 is configured to determine a quantity of idle threads in a pool of parallel-execution threads.

The first acquiring unit 112 is configured to acquire the at least two pieces of transaction data from the execution queue according to the two sequences through the idle threads in response to the quantity of the idle threads being equal to or greater than a threshold for parallel-execution threads, where a quantity of the at least two pieces of the transaction data is equal to the quantity of the idle threads.

Specific implementations of functions of the first determining unit 111 and the first acquiring unit 112 may refer to the step S101 in an embodiment as shown in Figure 3, and are not illustrated herein.

Reference is further made to Figure 9. The contract provisions corresponding to the at least pieces of the transaction data comprise at least two transaction-executing provisions of at least two smart contracts.

The second acquiring module 12 may comprise a second determining unit 121, a third determining unit 122, and a second acquiring unit 123.

The second determining unit 121 is configured to determine the at least two smart contracts for executing the at least two pieces of the transaction data according to contract identifiers that are comprised in the at least two pieces of contract information, respectively.

The third determining unit 122 is configured to determine the at least two transaction-executing provisions invoked by the at least two smart contracts for executing the at least two pieces of the transaction data according to provision identifiers that are comprised in the at least two pieces of contract information, respectively.

The second acquiring unit 123 is configured to execute the at least two transaction-executing provisions in parallel, where the read cache and the write cache are generated when executing each of the at least two transaction-executing provision.

Specific implementations of functions of the second determining unit 121, the third determining unit 122 and the second acquiring unit 123 may refer to the step S102 in an embodiment as shown in Figure 3, and are not illustrated herein.

Reference is further made to Figure 9. The second acquiring unit 123 may comprise a first cache sub-unit 1231, a first acquiring sub-unit 1232, a first storing sub-unit 1233 and a second storing sub-unit 1234.

The first cache sub-unit 1231 is configured to create an initial read cache and an initial write cache for each of the at least two pieces of the transaction data according to a corresponding one of the at least two transaction-executing provisions.

The first acquiring sub-unit 1232 is configured to execute the at least two transaction-executing provisions in parallel, where a piece of read data and a piece of write data is generated when executing each of the at least two transaction-executing provision.

The first storing sub-unit 1233 is configured to store each piece of read data into the corresponding initial read cache to obtain the read cache for each of the at least two pieces of transaction data.

The second storing sub-unit 1234 is configured to store each piece of write data into the corresponding initial write cache to obtain the write cache for each of the at least two pieces of transaction data.

Specific implementations of functions of the first cache sub-unit 1231, the first acquiring sub-unit 1232, the first storing sub-unit 1233 and the second storing sub-unit 1234 may refer to the step S102 in an embodiment as shown in Figure 3, and are not illustrated herein.

Reference is further made to Figure 9. The third acquiring module 13 may comprise a third acquiring unit 131 and an update generating 132.

The third acquiring unit 131 is configured to traverse the merged write caches according to a sequence of decreasing block heights and a sequence of decreasing sequential numbers of the transaction data until the merged write cache to be read for the target piece of the transaction data is acquired.

The update generating 132 is configured to generate the updated read cache according to the merged write cache to be read for the target piece of the transaction data.

Specific implementations of functions of the third acquiring unit 131 and the update generating 132 may refer to the step S103 in an embodiment as shown in Figure 3, and are not illustrated herein.

Reference is further made to Figure 9. The first merging module 14 may comprise a data checking unit 143 and a fifth determining unit 144.

The data checking unit 143 is configured to check inconsistency on read data between the read cache for the target piece of the transaction data and the updated read cache to obtain a check result.

The fifth determining unit 144 is configured to determine the to-be-merged write cache for the target piece of the transaction data according to the check result and the write cache for the target piece of the transaction data.

Reference is further made to Figure 9. The first merging module 14 may comprise a fourth determining unit 141 and a fourth acquiring unit 142.

The fourth determining unit 141 is configured to determine the read data in the read cache for the target piece of the transaction data as target read data.

The fourth acquiring unit 142 is configured to determine a target object of the target read data, and acquire updated read data, which is associated with the target object, from the updated read cache.

The data checking unit 143 is configured to check the inconsistency between the target read data determined by the fourth determining unit 141 and the updated read data acquired by the fourth acquiring unit 142 to obtain the check result.

Specific implementations of functions of the fourth determining unit 141, the fourth acquiring unit 142, the data checking unit 143 and the fifth determining unit 144 may refer to the step S104 in the corresponding embodiments in Figure 3, and are not illustrated herein.

As shown in Figure 9, the check result includes the first check result and the second check result.

The data checking unit 143 may comprise a data comparing sub-unit 1431, a first determining sub-unit 1432 and a second determining sub-unit 1433.

The data comparing sub-unit 1431 is configured to compare the target read data with the updated read data.

The first determining sub-unit 1432 is configured to determine the check result to be the first check result in response to the target read data being identical to the updated read data, where the first check result indicates that there is no inconsistency between the target read data and the updated read data.

The second determining sub-unit 1433 is configured to determine the check result to be the second check result in response to the target read data being different from the updated read data, where the second check result indicates that there is the inconsistency between the target read data and the updated read data.

Specific implementations of functions of the data comparing sub-unit 1431, the first determining sub-unit 1432 and the second determining sub-unit 1433 may refer to the step S104 in the corresponding embodiments in Figure 3, and are not illustrated herein.

Reference is further made to Figure 9. The fifth determining unit 144 may comprise a third determining sub-unit 1441 and a second cache sub-unit 1442.

The third determining sub-unit 1441 is configured to determine the write cache for the target piece of the transaction data as the to-be-merged write cache for the target piece of the transaction data, in response to the first check result being the first check result.

The second cache sub-unit 1442 is configured to generate the to-be-merged write cache for the target piece of the transaction data according to the updated read data and the piece of contract information carried by the target piece of the transaction data, in response to the check result being the second check result.

Specific implementations of functions of the third determining sub-unit 1441 and the second cache sub-unit 1442 may refer to the step S104 in an embodiment as shown in Figure 3, and are not illustrated herein.

Reference is further made to Figure 9. The second cache sub-unit 1442 is further configured to determine a target smart contract for executing the target piece of the transaction data according to a contract identifier in the piece of contract information carried by the target piece of the transaction data.

The second cache sub-unit 1442 is further configured to determine a target transaction-executing provision invoked by the target smart contract for executing the target piece of the transaction data according to an provision identifier in the piece of contract information carried by the target piece of the transaction data.

The second cache sub-unit 1442 is further configured to execute the target transaction-executing provision according to the updated read data and the target piece of the transaction data to acquire a target result.

The second cache sub-unit 1442 is further configured to update the write cache for the target piece of the transaction data according to the target result to obtain the to-be-merged write cache of the target piece of the transaction data.

For the specific function implementation of the second cache sub-unit 1442 may refer to the step S104 in an embodiment as shown in Figure 3, and are not illustrated herein.

Reference is further made to Figure 9. The third acquiring module 13 may comprise a fifth acquiring unit 133, a sixth determining unit 134, a seventh determining unit 135 and an eighth determining unit 136.

The fifth acquiring unit 133 is configured to acquire a target block to which the target piece of the transaction data belongs, and determine a target block height of the target block.

The sixth determining unit 134 is configured to determine a merged piece of the transaction data in the target block according to the sequence of the sequential numbers, where the sequential number of the merged piece of the transaction data is smaller than the sequential number of the target piece of the transaction data.

The seventh determining unit 135 is configured to determine a merged block from the at least two blocks according to the target block height, where a block height of the merged block is smaller than the target block height.

The eighth determining unit 136 is configured to determine the write cache in the block cache of the merged block and the write cache for the merged piece of the transaction data as the merged write caches.

Specific implementations of functions of the fifth acquiring unit 133, the sixth determining unit 134, the seventh determining unit 135, and the eighth determining unit 136 may refer to the steps S1031 to S1036 in an embodiment as shown in Figure 8, and are not illustrated herein.

Reference is further made to Figure 9. The at least two blocks belong to a fork blockchain. The fork blockchain comprises hash mapping tables corresponding to at least two branch chains, respectively. Each hash mapping table indicates association between block heights and hashes of blocks in the corresponding branch chain.

The seventh determining unit 135 may comprise a second acquiring sub-unit 1351, a fourth determining sub-unit 1352, and a fifth determining sub-unit 1353.

The second acquiring sub-unit 1351 is configured to acquire a target hash of the target block, and determine a target hash mapping table which comprises the target hash from the at least two hash mapping tables.

The fourth determining sub-unit 1352 is configured to determine a hash, which is in the target hash mapping table and associated with a block height smaller than the target block height, as a merged hash.

The fifth determining sub-unit 1353 is configured to determine a block, which has the merged hash and is in the branch chain corresponding to the target hash mapping table, as the merged block.

Specific implementations of functions of the second acquiring sub-unit 1351, the fourth determining sub-unit 1352, and the fifth determining sub-unit 1353 may refer to the step S1033 to S1035 in an embodiment as shown in Figure 8, and are not illustrated herein.

In embodiments of the present disclosure, the contract provisions corresponding to the at least two pieces of the transaction data can be executed in parallel according to the respective contract information carried by the at least two pieces of transaction data. The at least two pieces of transaction data are sequenced according to the block heights and the sequential numbers of the pieces of the transaction data. The read cache and the write cache generated by executing each contract provision are acquired. The read cache for the target piece of the transaction data may be an outdated read cache. Thus, the merged write cache is first determined within the block caches for the at least two blocks, and then the updated read cache for the target piece of the transaction data is acquired from the merged write caches. Piece(s) of the transaction data corresponding to the merged write cache(s) is previous to the target piece of the transaction data with respect to the position in the execution queue or the time point of being added into the execution queue. It can be determined based on the updated read cache whether the read cache for the target piece of the transaction data is outdated, and then the to-be-merged write cache of the target piece of the transaction data may be determined according to the updated read cache and the write cache for the target piece of the transaction data. In one aspect, multiple pieces of transaction data are executed in parallel, thus efficiency of processing the transaction data is improved in the blockchain network, and it is less likely that a large amount of transaction data jams in the execution queue. In another aspect, after the multiple pieces of transaction data are executed in parallel, the updated read cache can be acquired for each piece of the transaction data according to the merged write cache corresponding to such each piece of the transaction data, then it is determined based on such updated read cache whether the corresponding read cache is outdated. Thereby, the read cache and the write cache are checked to ensure correctness of the to-be-merged write cache. That is, data correctness in the block caches can be ensured while efficiency of processing the transaction data is improved.

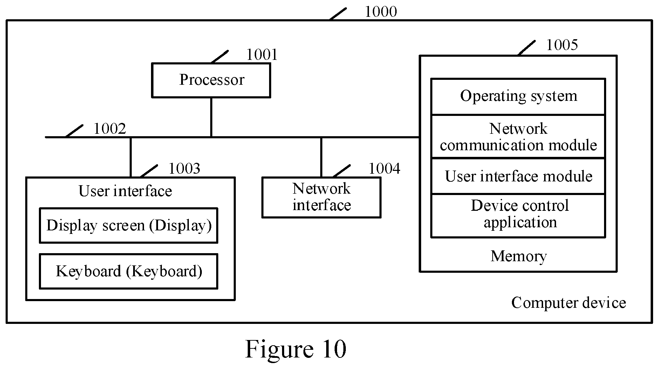

Reference is made to Figure 10, which is a schematic structural diagram of a computer device according to an embodiment of the present disclosure. As shown in Figure 10, the computer device 1000 may comprise: at least one processor 1001 such as a CPU, at least one network interface 1004, a user interface 1003, a memory 1005, and at least one communication bus 1002. The communication bus 1002 is configured to implement connection and communication between the components. The user interface 1003 may include a display and a keyboard. The network interface 1004 may optionally include a standard wired interface and a wireless interface (such as a WI-FI interface). The memory 1005 may be a high-speed RAM, or may be a non-volatile memory, for example, at least one magnetic disk memory. Optionally, the memory 1005 may be at least one storage apparatus that is far away from the foregoing processor 1001. As shown in Figure 10, the memory 1005 used as a computer storage medium may include an operating system, a network communication module, a user interface module, and a device-control application program.

In the computer device 1000 as shown in Figure 10, the network interface 1004 may provide a network communication function. The user interface 1003 is mainly configured to provide an input interface for the user. The processor 1001 may be configured to invoke the device controlling application stored in the memory 1005, so as to implement following operations.

Transaction data of at least two blocks is added into an execution queue according to a sequence of block heights each corresponding to one of the at least two blocks and a sequence of sequential numbers each corresponding to one piece of the transaction data, and at least two pieces of the transaction data are acquired from the execution queue according to the two sequences, where the at least two pieces of the transaction data each carries a piece of contract information.

Contract provisions indicated in the contract information carried by the at least two pieces of the transaction data are executed in parallel, where a read cache and a write cache are generated when executing each of the contract provisions.

A merged write cache is determined from block caches of the at least two blocks, and an updated read cache for a target piece among the at least two pieces of the transaction data is acquired from the merged write caches, where a piece of the transaction data that corresponds to the merged write cache is previous to the target piece of the transaction data with respect to a position in the execution queue or a time point of being added into the execution queue.

A to-be-merged write cache for the target piece of the transaction data is determined according to the updated read cache, the read cache forthe target piece of the transaction data, and the write cache for the target piece of the transaction data.

The to-be-merged write cache of the target piece of the transaction data is merged into the block cache of a block to which the target piece of the transaction data belongs. Then, a piece of the transaction data subsequent to the target piece of the transaction data in the execution queue may be processed to merge the to-be-merged write cache of such piece of the transaction data.

The computer device 1000 described herein may implement the method described in embodiments as shown in Figure 3, Figure 7, and Figure 8, or implement the apparatus described in an embodiment as shown in Figure 9. Details are not repeated herein. Beneficial effects of the same solution are not repeated herein.

A computer-readable storage medium is further provided according to embodiments of the present disclosure. The computer-readable storage medium stores a computer program. The computer program comprises a program instruction which when executed by a processor is capable to implement the method according to steps in Figure 3, Figure 7, and Figure 8. Specific processes may refer to implementation of each step in Figure 3, Figure 7 and Figure 8, and are not illustrated herein. Beneficial effects of the same solution are not repeated herein.

The computer-readable storage medium may be the apparatus for processing data based on the blockchain according to any foregoing embodiment, or an internal storage unit of the computer device, such as a hard disk or an internal memory of the computer device. The computer-readable storage medium may be an external storage device of the computer device, such as a plug-in hard disk, a smart media card (SMC), a secure digital (SD) card, or a flash card that is provided in the computer device. The computer-readable storage medium may comprises both an internal storage unit and an external storage device of the computer device. The computer-readable storage medium is configured to store the computer program and other program and data that are required by the computer device. The computer-readable storage medium may be further configured for temporary storage of data that has been outputted or is to be outputted.

A computer program product or a computer program is further provided according to embodiments of the present disclosure. The computer program product or the computer program comprises computer instructions, and the computer instructions are stored in a computer-readable storage medium. A processor of a computer device reads the computer instructions from the computer-readable storage medium and executes the computer instructions to configure the computer device to perform the method described in any foregoing embodiment as shown in Figure 3, Figure 7, and Figure 8. Details are not repeated herein. Beneficial effects of the same solution are not repeated herein.

Herein the terms "first" and "second" in specifications, claims, and drawings are intended to distinguish different objects but do not indicate a specific order. The term "comprise" and any variant thereof are intended to cover a non-exclusive inclusion. For example, a process, method, apparatus, product, or device that comprises a series of steps or modules is not limited to the listed steps or modules, but may further optionally comprise a step or a module that is not listed, or comprise another step or another unit that is intrinsic to such process, method, apparatus, product, or device.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific application and design constraints for the technical solution. For each specific application, different methods may be used by those skilled in the art to implement the described function, and such implementation should not be considered to depart from the scope of this invention.

The methods and related apparatuses according to embodiments of the present disclosure are described with reference to method flowcharts and/or schematic structural diagrams according to embodiments of the present disclosure. Specifically, each process of the method flowcharts and/or each block of the schematic structural diagrams, and a combination of processes in the flowcharts and/or a combination blocks in the block diagrams, may be implemented by computer program instructions. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the schematic structural diagrams. These computer program instructions may also be stored in a computer-readable memory that can guide a computer or another programmable data processing device to operate in a specified manner, so that the instructions stored in the computer-readable memory generate a product including an instruction apparatus, where the instruction apparatus implements functions specified in one or more processes in the flowcharts and/or one or more blocks in the schematic structural diagrams. The computer program instructions may be loaded into a computer or another programmable data processing device, so that a series of operations and steps are performed on the computer or the programmable device, thereby generating computer-implemented processing. Therefore, the instructions that are executed on the computer or the programmable device engender steps for implementing a specific function in one or more processes in the flowcharts and/or in one or more blocks in the schematic structural diagrams.

Hereinabove disclosed are merely preferable embodiments of the present disclosure, which are not intended for limiting the protection scope of the present disclosure. Therefore, equivalent variations made in accordance with the claims of the present disclosure shall fall within the scope of the present disclosure.

## Claims

1. A method for processing data based on a blockchain, executable by a computer device, wherein the method comprises:
adding transaction data of at least two blocks into an execution queue according to a sequence of block heights each corresponding to one of the at least two blocks and a sequence of sequential numbers each corresponding to one piece of the transaction data, and acquiring at least two pieces of the transaction data from the execution queue according to the two sequences, wherein the at least two pieces of the transaction data each carries a piece of contract information;
executing, in parallel, contract provisions indicated in the contract information carried by the at least two pieces of the transaction data, wherein a read cache and a write cache are generated when executing each of the contract provisions;
determining merged write caches from block caches of the at least two blocks, and acquiring, from the merged write caches, an updated read cache for a target piece among the at least two pieces of the transaction data, wherein a piece of the transaction data that corresponds to the merged write cache is previous to the target piece of the transaction data with respect to a position in the execution queue or a time point of being added into the execution queue;
determining a to-be-merged write cache forthe target piece of the transaction data according to the updated read cache, the read cache for the target piece of the transaction data, and the write cache for the target piece of the transaction data; and
merging the to-be-merged write cache of the target piece of the transaction data into the block cache of a block to which the target piece of the transaction data belongs.

2. The method according to claim 1, wherein the at least two pieces of transaction data are from different blocks.

3. The method according to claim 1, wherein determining the to-be-merged write cache for the target piece of the transaction data according to the updated read cache, the read cache for the target piece of the transaction data, and the write cache for the target piece of the transaction data comprises:
checking inconsistency on read data between the read cache for the target piece of the transaction data and the updated read cache to obtain a check result; and
determining the to-be-merged write cache for the target piece of the transaction data according to the check result and the write cache for the target piece of the transaction data.

4. The method according to claim 1, wherein acquiring the at least two pieces of the transaction data from the execution queue according to the two sequences comprises:
determining a quantity of idle threads in a pool of parallel-execution threads; and
acquiring the at least two pieces of transaction data from the execution queue according to the two sequences through the idle threads in response to the quantity of the idle threads being equal to or greater than a threshold for parallel-execution threads, wherein a quantity of the at least two pieces of the transaction data is equal to the quantity of the idle threads.

5. The method according to claim 1, wherein:
the contract provisions corresponding to the at least pieces of the transaction data comprise at least two transaction-executing provisions of at least two smart contracts; and
executing, in parallel, the contract provisions indicated in the contract information carried by the at least two pieces of the transaction data comprises:
determining the at least two smart contracts for executing the at least two pieces of the transaction data according to contract identifiers that are comprised in the at least two pieces of contract information, respectively;
determining the at least two transaction-executing provisions, which are invoked by the at least two smart contracts for executing the at least two pieces of the transaction data, according to provision identifiers that are comprised in the at least two pieces of contract information, respectively; and
executing the at least two transaction-executing provisions in parallel, wherein the read cache and the write cache are generated when executing each of the at least two transaction-executing provision.

6. The method according to claim 5, wherein executing the at least two transaction-executing provisions in parallel comprises:
creating an initial read cache and an initial write cache for each of the at least two pieces of the transaction data according to a corresponding one of the at least two transaction-executing provisions;
executing the at least two transaction-executing provisions in parallel, wherein a piece of read data and a piece of write data is generated when executing each of the at least two transaction-executing provision;
storing each piece of read data into the corresponding initial read cache to obtain the read cache for each of the at least two pieces of transaction data; and
storing each piece of write data into the corresponding initial write cache to obtain the write cache for each of the at least two pieces of transaction data.

7. The method according to claim 1, wherein acquiring, from the merged write caches, the updated read cache for the target piece of the transaction data comprises:
traversing the merged write caches according to a sequence of decreasing block heights and a sequence of decreasing sequential numbers of the transaction data, until the merged write cache to be read for the target piece of the transaction data is acquired; and
generating the updated read cache according to the merged write cache to be read for the target piece of the transaction data.

8. The method according to claim 3, wherein checking the inconsistency on read data between the read cache for the target piece of the transaction data and the updated read cache to obtain the check result comprises:
determining the read data in the read cache for the target piece of the transaction data as target read data;
determining a target object of the target read data, and acquiring updated read data, which is associated with the target object, from the updated read cache; and
checking the inconsistency between the target read data and the updated read data to obtain the check result.

9. The method according to claim 8, wherein:
the check result is a first check result or a second check result; and
checking the inconsistency between the target read data and the updated read data obtain the check result comprises:
comparing the target read data with the updated read data;
determining the check result to be the first check result in response to the target read data being identical to the updated read data, wherein the first check result indicates that there is no inconsistency between the target read data and the updated read data; and
determining the check result to be the second check result in response to the target read data being different from the updated read data, wherein the second check result indicates that there is the inconsistency between the target read data and the updated read data.

10. The method according to claim 9, wherein determining the to-be-merged write cache for the target piece of the transaction data according to the check result and the write cache for the target piece of the transaction data comprises:
determining the write cache for the target piece of the transaction data as the to-be-merged write cache for the target piece of the transaction data, in response to the first check result being the first check result; and
generating the to-be-merged write cache for the target piece of the transaction data according to the updated read data and the piece of contract information carried by the target piece of the transaction data, in response to the check result being the second check result.

11. The method according to claim 10, wherein determining the to-be-merged write cache for the target piece of the transaction data according to the updated read cache, the read cache for the target piece of the transaction data, and the write cache for the target piece of the transaction data comprises:
determining a target smart contract for executing the target piece of the transaction data according to a contract identifier in the piece of contract information carried by the target piece of the transaction data;
determining a target transaction-executing provision, which is invoked by the target smart contract for executing the target piece of the transaction data, according to an provision identifier in the piece of contract information carried by the target piece of the transaction data;
executing the target transaction-executing provision according to the updated read data and the target piece of the transaction data to acquire a target result; and
updating the write cache for the target piece of the transaction data according to the target result to obtain the to-be-merged write cache of the target piece of the transaction data.

12. The method according to claim 1, wherein determining the merged write caches from block caches of the at least two blocks comprises:
acquiring a target block to which the target piece of the transaction data belongs, and determining a target block height of the target block;
determining a merged piece of the transaction data in the target block according to the sequence of the sequential numbers, wherein the sequential number of the merged piece of the transaction data is smaller than the sequential number of the target piece of the transaction data;
determining a merged block from the at least two blocks according to the target block height, wherein a block height of the merged block is smaller than the target block height; and
determining the write cache in the block cache of the merged block and the write cache for the merged piece of the transaction data as the merged write caches.

13. The method according to claim 12, wherein the at least two blocks belong to a fork blockchain, the fork blockchain comprises hash mapping tables corresponding to at least two branch chains, respectively, and each hash mapping table indicates association between block heights and hashes of blocks in the corresponding branch chain; and
determining a merged block from the at least two blocks according to the target block height comprises:
acquiring a target hash of the target block, and determining a target hash mapping table which comprises the target hash from the at least two hash mapping tables;
determining a hash, which is in the target hash mapping table and associated with a block height smaller than the target block height, as a merged hash; and
determining a block, which has the merged hash and is in the branch chain corresponding to the target hash mapping table, as the merged block.

14. An apparatus for processing data based on a blockchain, applicable to a computer device, wherein the apparatus comprises:
a first acquiring module, configured to add transaction data of at least two blocks into an execution queue according to a sequence of block heights each corresponding to one of the at least two blocks and a sequence of sequential numbers each corresponding to one piece of the transaction data, and acquire at least two pieces of the transaction data from the execution queue according to the two sequences, wherein the at least two pieces of the transaction data each carries a piece of contract information;
a second acquiring module, configured to execute, in parallel, contract provisions indicated in the contract information carried by the at least two pieces of the transaction data, wherein a read cache and a write cache are generated when executing each of the contract provisions;
a third acquiring module, configured to determine merged write caches from block caches of the at least two blocks, and acquire, from the merged write caches, an updated read cache for a target piece among the at least two pieces of the transaction data, wherein a piece of the transaction data that corresponds to the merged write cache is previous to the target piece of the transaction data with respect to a position in the execution queue or a time point of being added into the execution queue;
a first merging module, configured to determine a to-be-merged write cache for the target piece of the transaction data according to the updated read cache, the read cache for the target piece of the transaction data, and the write cache for the target piece of the transaction data; and
a second merging module, configured to merge the to-be-merged write cache of the target piece of the transaction data into the block cache of a block to which the target piece of the transaction data belongs, and then process a piece of the transaction data subsequent to the target piece of the transaction data in the execution queue to merge the to-be-merged write cache of the subsequent piece of the transaction data.

15. A computer device, comprising a processor, a memory, and a network interface, wherein:
the processor is connected to the memory and the network interface;
the network interface is configured to enable data communication;
the memory is configured to store a computer program; and
the processor is configured to invoke the computer program to configure the computer device to perform the method according to any one of claims 1 to 13.

16. A computer-readable storage medium, storing a computer program, wherein:
the computer program is capable o be loaded and executed by a processor to configure a computer device comprising the processor to perform the method according to any one of claims 1 to 13.

17. A computer program product, wherein:
the computer program product when executed implements the method according to any one of claims 1 to 13.
